# EUROPEAN PATENT APPLICATION

(11) **EP 4 677 982 A1**
(43) Date of publication of application: **14.01.2026**
(21) Application number: 25183131.9
(22) Date of filing: 16.06.2025
(51) Int. Cl.: A01B 76/00, A01B 13/02, A01B 69/04

(54) **EVALUATION SYSTEM AND EVALUATION METHOD**

(30) Priority: 02.07.2024 JP 2024106870
(71) Applicant: Kubota Corporation, Osaka-shi, Osaka 556-8601 (JP)
(72) Inventor: MURAKAWA, Ryoma, 5900908 Sakai-Shi Osaka (JP); KOMIYA, Yuto, 5900908 Sakai-Shi Osaka (JP); KITAJIMA, Toshihiro, 5900908 Sakai-Shi Osaka (JP)
(74) Representative: Cabinet Beau de Loménie

(57) **Abstract**

An evaluation system (S) includes an arithmetic processor (20c) configured or programmed to perform determination about a formation abnormality in formation of a formed object formed by a working device (2) on an agricultural field based on an image of the formed object.

## Description

### BACKGROUND OF THE INVENTION

### Field of the Invention

The present invention relates to an evaluation system and an evaluation method for performing determination about a formation abnormality in formation of a formed object formed on an agricultural field.

### Description of the Related Art

Japanese Unexamined Patent Application Publication No. 2021-153567 discloses an agricultural traveling vehicle including a direction identifier to identify the direction of a ridge, and a traveling controller to control the agricultural traveling vehicle such that the agricultural traveling vehicle travels in the direction of the ridge identified by the direction identifier.

### SUMMARY OF THE INVENTION

Although the agricultural traveling vehicle in Japanese Unexamined Patent Application Publication No. 2021-153567 is configured to identify the direction of a formed object (e.g., a ridge) formed on an agricultural field, the agricultural traveling vehicle is not configured to perform determination about a formation abnormality in formation of the formed object (e.g., a ridge).

The present invention is directed to addressing the above-mentioned problem associated with the related art. Accordingly, the present invention provides an evaluation system and an evaluation method that make it possible to correctly evaluate whether a formed object formed by a working device on an agricultural field is acceptable.

An evaluation system according to an example embodiment of the present invention includes an arithmetic processor configured or programmed to perform determination about a formation abnormality in formation of a formed object formed by a working device on an agricultural field based on an image of the formed object.

The arithmetic processor may be configured or programmed to perform determination about a formation abnormality in formation of the formed object using a processing result obtained by subjecting the image to abnormality detection processing.

The arithmetic processor may be configured or programmed to perform the abnormality detection processing which includes calculating the degree of deviation of a portion of the image that represents the formed object from a shape of a normal formed object, and determine that there is a formation abnormality in formation of the formed object when the degree of deviation, which is the processing result, is greater than a threshold.

The arithmetic processor may be configured or programmed to perform the abnormality detection processing which includes calculating an abnormal region in which the portion of the image that represents the formed object deviates from the shape of the normal formed object, and generate the image with the abnormal region.

The evaluation system may further include a working machine including the working device and a traveling vehicle body with the working device attached thereto, the working machine being configured to operate in manual operation in which at least one of the working device or the traveling vehicle body is manually controlled. The working machine may include a notifier to, when it is determined that there is a formation abnormality in formation of the formed object during the manual operation, provide a notification of the formation abnormality.

The evaluation system may further include a working machine including the working device, a traveling vehicle body with the working device attached thereto, and a controller configured or programmed to control at least one of the working device or the traveling vehicle body based on predetermined control content, the working machine being configured to operate in automatic operation in which at least one of the working device or the traveling vehicle body is automatically controlled. The controller may be configured or programmed to, when it is determined that there is a formation abnormality in formation of the formed object during the automatic operation, perform the automatic operation based on modified control content which differs from a case in which it is not determined that there is a formation abnormality in formation of the formed object.

The controller may be configured or programmed to, when it is determined that there is a formation abnormality in formation of the formed object during the automatic operation, perform the automatic operation in which (i) a speed of the traveling vehicle body is changed from the speed at a time when it was determined that there was a formation abnormality in formation of the formed object and/or (ii) a working position of the working device is changed from the working position at the time when it was determined that there was a formation abnormality in formation of the formed object.

The controller may be configured or programmed to, when it is determined that there is a formation abnormality in formation of the formed object during the automatic operation, perform the automatic operation in which (i) the speed of the traveling vehicle body is changed to be lower than the speed at the time when it was determined that there was a formation abnormality in formation of the formed object and/or (ii) the working position of the working device is changed to a second working position lower than a first working position which is the working position at the time when it was determined that that there was a formation abnormality in formation of the formed object.

The evaluation system may further include a sensor assembly to acquire point cloud data representing one or more geographical features in a surrounding area of the working device. The arithmetic processor may be configured or programmed to generate the image by subjecting, to image processing, extracted point cloud data extracted from a region-of-interest of the point cloud data.

The arithmetic processor may be configured or programmed to start the image processing upon satisfaction of a detection condition for the formed object.

The arithmetic processor may be configured or programmed to determine that the detection condition is satisfied when, after work performed by the working device is started, a predetermined distance has been traveled since the start of the work.

The evaluation system may further include a working machine including the working device, a traveling vehicle body with the working device attached thereto, a position estimator to estimate a position of the traveling vehicle body, and the sensor assembly. The arithmetic processor may be configured or programmed to convert, based on position information indicating a plurality of the positions of the traveling vehicle body estimated by the position estimator, pieces of extracted point cloud data extracted from a plurality of the regions-of-interest acquired by the sensor assembly each into a world coordinate system from a coordinate system of the sensor assembly, the plurality of regions-of-interest being different in terms of position information from each other, and combine the pieces of extracted point cloud data of the plurality of regions-of-interest in the world coordinate system.

The arithmetic processor may be configured or programmed to generate the image which is a planar image in a predetermined plane of the world coordinate system obtained from the combined pieces of extracted point cloud data in the world coordinate system.

The arithmetic processor may be configured or programmed to reconstruct the image with the abnormal region into point cloud data with abnormal point cloud data in a coordinate system of a sensor assembly.

An evaluation method according to an example embodiment of the present invention includes causing an arithmetic processor to perform determination about a formation abnormality in formation of a formed object formed by a working device on an agricultural field based on an image of the formed object.

One or more example embodiments of the present invention make it possible to correctly evaluate whether a formed object formed by a working device on an agricultural field is acceptable.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is an overall view of an example of an evaluation system.
FIG. 2 is a schematic side view of a working machine.
FIG. 3 is a schematic plan view of the working machine.
FIG. 4 is a perspective view of a position changer as seen from the rear.
FIG. 5 illustrates an example of the sensing range to be sensed by one or more sensor assemblies provided to the working machine.
FIG. 6 illustrates a worked region.
FIG. 7 illustrates a planned travel route.
FIG. 8 illustrates an example of a series of processing to be performed by an arithmetic processor.
FIG. 9A is a flowchart illustrating an example of determination processing for determining whether a detection condition for a formed object is satisfied.
FIG. 9B is a flowchart illustrating an example of elevation image generation and an example of abnormality detection processing.
FIG. 9C illustrates an example of visualization processing of a formed object and an example of control processing based on a formation abnormality.
FIG. 10A illustrates an example of an image captured at the start of work.
FIG. 10B illustrates an example of an image captured at a given distance traveled away from a work start point.
FIG. 11 illustrates the relationship between a region-of-interest and all pieces of point cloud data obtained by a second sensor assembly.
FIG. 12A illustrates movement of a region-of-interest associated with movement of a tractor, and superimposition of two regions-of-interest that differ in terms of the position of the tractor.
FIG. 12B illustrates an example of point cloud data without superimposition of regions-of-interest.
FIG. 12C illustrates an example of point cloud data with superimposition of regions-of-interest.
FIG. 13 illustrates mapping of pieces of extracted point cloud data onto an elevation image.
FIG. 14 illustrates median filtering of grid cells.
FIG. 15 illustrates interpolation processing of grid cells.
FIG. 16 illustrates normalization processing of grid cells.
FIG. 17 illustrates an example of an elevation image that has undergone abnormality detection processing.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

An embodiment of the present invention will now be described with reference to the drawings.

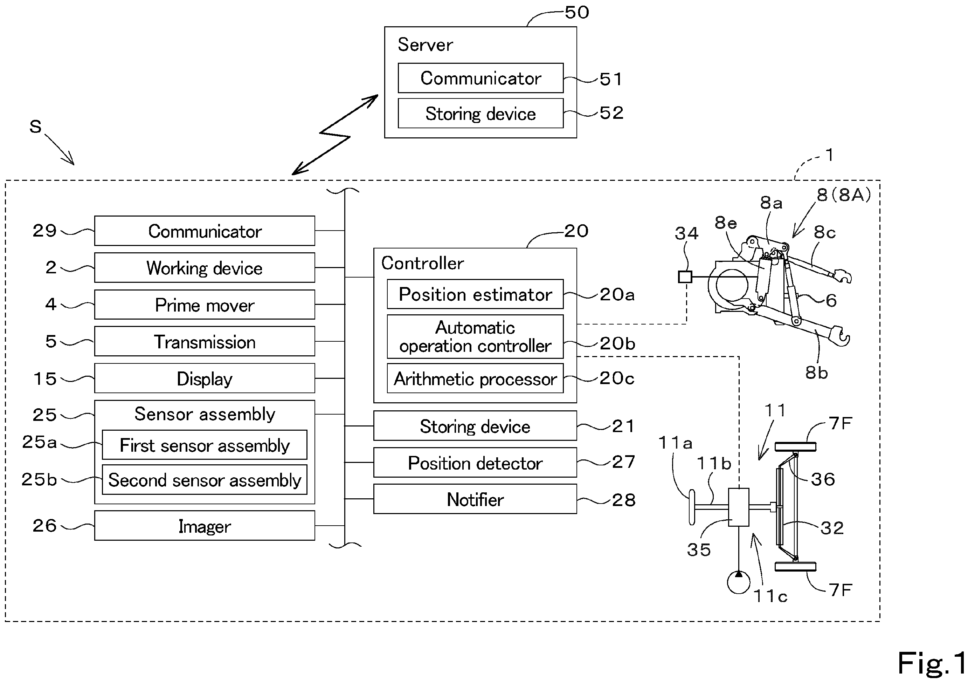

FIG. 1 is an overall view of an example of an evaluation system S according to the embodiment. The evaluation system S performs determination about a formation abnormality in formation of a formed object M (e.g., a ridge M1) on an agricultural field H1. According to the embodiment, a working machine 1 includes the evaluation system S. A server 50 described later may include part of the evaluation system S (e.g., a position estimator 20a, an automatic operation controller 20b, and/or an arithmetic processor 20c). The evaluation system S may be implemented by the working machine 1 and the server 50 acting in cooperation with each other.

The working machine 1 will be described first. The working machine 1 is a vehicle configured to perform work while traveling. According to the embodiment, the working machine 1 is a tractor including a traveling vehicle body 3 (machine body) to attach a working device 2 (implement) thereto. The working machine 1 may be any vehicle configured to perform work while traveling, and is not limited to a tractor. For example, the working machine 1 may be a farm machine such as a combine or a rice transplanter, or a construction machine such as a compact track loader or a backhoe.

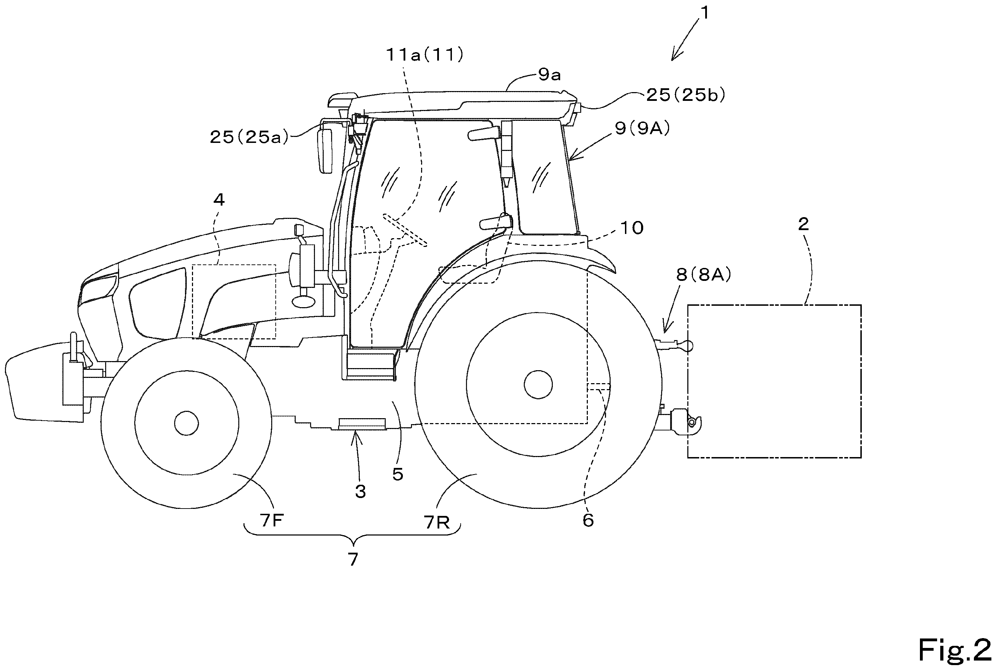

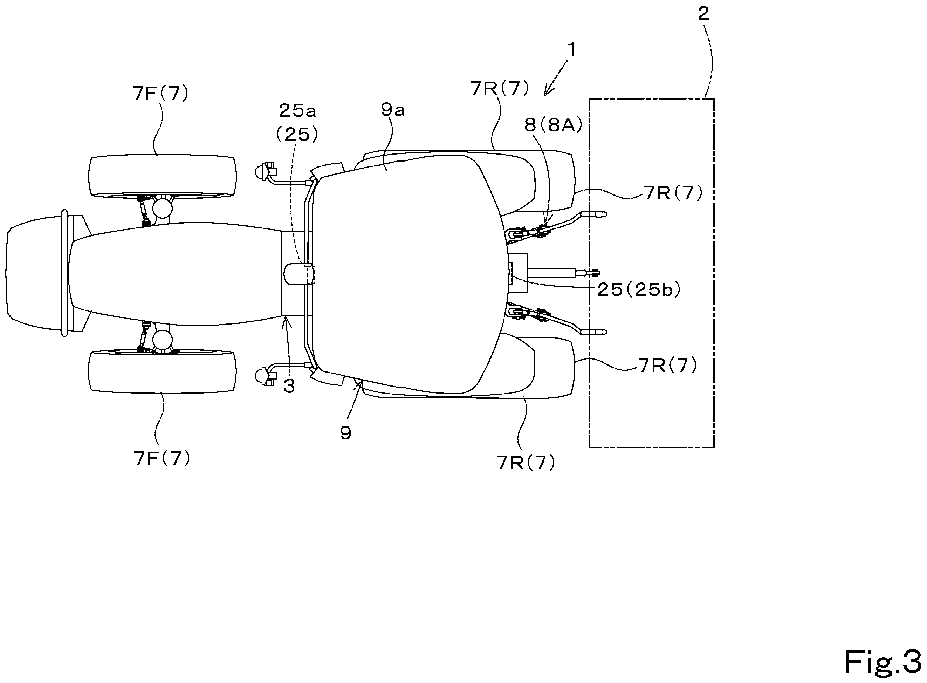

FIG. 2 is a schematic side view of the working machine 1. FIG. 3 is a schematic plan view of the working machine 1. In the following description of the embodiment, the direction (the left-hand portion of FIGS.2 and 3) in which the operator seated on an operator's seat 10 of the working machine 1 faces is referred to as frontward or forward, and the direction (the right-hand portion of FIGS. 2 and 3) opposite to this direction is referred to as rearward. The direction leftward of the operator (the near side of FIG. 2; the lower side of FIG. 3) is referred to as leftward, and the direction rightward of the operator (the far side of FIG. 2; the upper side of FIG. 3) is referred to as rightward. The horizontal direction, which is a direction orthogonal to the front-rear direction, is referred to as width direction.

As illustrated in FIGS. 2 and 3, the working machine 1 includes the traveling vehicle body 3, a prime mover 4, and a transmission 5. The traveling vehicle body 3 includes a traveling device 7. The traveling device 7 provides propelling force to the traveling vehicle body 3 as the traveling device 7 is driven. The traveling device 7 is a wheeled traveling device 7 with at least one front wheel 7F and at least one rear wheel 7R each including a tire. A pair of front wheels 7F are provided in spaced relation in the width direction, and a pair of rear wheels 7R are provided in spaced relation in the width direction. In another example, the traveling device 7 may include the front wheel 7F and the rear wheel 7R that are crawlers. The traveling vehicle body 3 is configured to travel forward and rearward as the traveling device 7 is driven.

The prime mover 4 is incorporated in a front portion of the traveling vehicle body 3. In one example, the prime mover 4 is a diesel engine. In another example, the prime mover 4 may be another internal combustion engine such as a gasoline engine, an electric motor, and/or the like.

The transmission 5 allows speed stages to be changed to speed-change the power output from the prime mover 4. The transmission 5 is thus configured to change the propelling force provided to the traveling device 7, and also change the states of the traveling device 7 (between forward travel and reverse travel of the traveling device 7). The transmission 5 transmits the power from the prime mover 4 to a PTO shaft 6. The PTO shaft 6 is an output shaft to be connected to the working device 2 to drive the working device 2.

A protective assembly 9 is provided at an upper portion of the traveling vehicle body 3 to protect the operator's seat 10. The protective assembly 9 is, for example, a cabin 9A surrounding the operator's seat 10. The operator's seat 10 is provided inside the cabin 9A. The protective assembly 9 is not limited to the cabin 9A but may be a canopy or a ROPS erected at the rear of the operator's seat 10.

The working device 2 is attachable to the traveling vehicle body 3. With the tractor according to the embodiment, the working device 2 is detachably mounted to the traveling vehicle body 3. Specifically, a coupling device 8 is provided at a front portion and/or rear portion of the traveling vehicle body 3 to allow attachment and detachment of the working device 2. FIGS. 2 and 3 illustrate an example where the coupling device 8 is provided at a rear portion of the traveling vehicle body 3. This configuration allows the working machine 1 to, when the working device 2 is coupled to the coupling device 8, tow the coupled working device 2 as the traveling device 7 travels.

FIGS. 2 and 3 illustrate an example where the coupling device 8 is a position changer 8A in the form of a three-point linkage. The position changer 8A is a raising/lowering device that raises or lowers the working device 2 relative to the traveling vehicle body 3 to change the positions of the traveling vehicle body 3 and the working device 2 relative to each other. The position changer 8A in the form of a three-point linkage will now be described in detail.

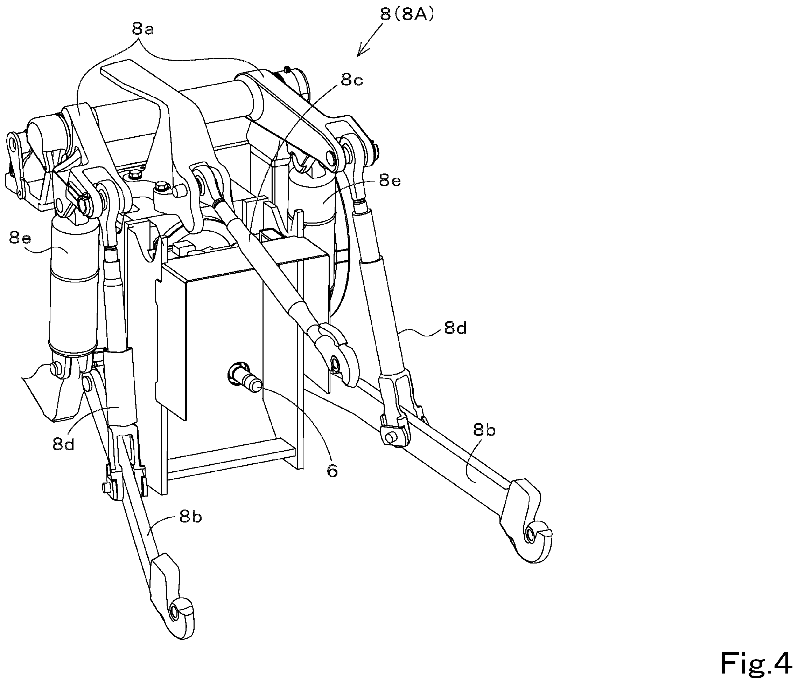

FIG. 4 is a perspective view of the position changer 8A as seen from the rear. The position changer 8A includes lift arm(s) 8a, lower link 8b, a top link 8c, lift rod(s) 8d, and lift cylinder(s) 8e.

The front end portion of the lift arm 8a is supported on an upper rear portion of a case (transmission case) accommodating the transmission 5, such that the front end portion of the lift arm 8a is allowed to swing upward or downward. The lift arm 8a swings (is raised or lowered) as the lift cylinder 8e is driven. The lift cylinder 8e is a hydraulic cylinder. As illustrated in FIG. 1, the lift cylinder 8e is connected to a hydraulic pump via a control valve 34. The control valve 34 is a solenoid valve or the like. The control valve 34 causes the lift cylinder 8e to extend or retract.

The front end portion of the lower link 8b is supported on a lower rear portion of the transmission 5 such that the front end portion of the lower link 8b is allowed to swing upward or downward. At a position above the lower link 8b, the front end portion of the top link 8c is supported on a rear portion of the transmission 5 such that the front end portion of the top link 8c is allowed to swing upward or downward. The lift rod 8d couples the lift arm 8a and the lower link 8b to each other. A rear portion of the lower link 8b, and a rear portion of the top link 8c have a hooked shape.

As the lift cylinder 8e is driven (extended or retracted), the lift arm 8a is raised or lowered, and the lower link 8b coupled to the lift arm 8a via the lift rod 8d is raised or lowered. This allows the working device 2 to swing upward or downward (to be raised or lowered) about a front portion of the lower link 8b.

Although the foregoing description is directed to the example where the coupling device 8 is the position changer 8A in the form of a three-point linkage, the coupling device 8 may be any device configured to at least couple the working device 2 to the traveling vehicle body 3. For example, the coupling device 8 may be in the form of a swinging drawbar or the like that couples the working device 2 and the traveling vehicle body 3 to each other, and that does not change the positions of the working device 2 and the traveling vehicle body 3 relative to each other.

The working device 2 is a device to perform work on a work field H (e.g., the agricultural field H1) or on a work object located in the work field H (e.g., a crop grown in the agricultural field H1). Examples of the working device 2 include: a cultivator for cultivation; a ridger for ridging; a furrow opener for opening furrows; a harvester for harvesting crops; a mower for mowing forage crops or the like; a tedder for tedding forage grass or the like; a rake for raking forage grass or the like; a baler for baling forage grass or the like; a fertilizer spreader for spreading fertilizer; an agricultural chemical spreader for spreading agricultural chemicals; and a separator for separating crops. According to the embodiment, the working device 2 is a ridger for ridging the agricultural field H1.

Although the embodiment is herein described with reference to an exemplary case where the working machine 1 is a tractor and the working device 2 is coupled to the coupling device 8, the working device 2 is not limited to an implement to be coupled to the traveling vehicle body 3 via the coupling device 8. For example, the working device 2 may be a front loader mounted to a front portion of the traveling vehicle body 3.

The working device 2 may be any device that is provided to the working machine 1 and that performs work on the work field H. Accordingly, the working device 2 need not necessarily be a device such as an implement that is detachably attachable to the traveling vehicle body 3. For example, in a case where the working machine 1 is a combine, the working device 2 includes a mower to perform work such as mowing crops. In a case where the working machine 1 is a rice transplanter, the working device 2 includes a planter to plant seedlings. In a case where the working machine 1 is a backhoe or a compact track loader, the working device 2 may be, for example, an attachment to be mounted to the position changer 8A (e.g., an arm or a boom).

As illustrated in FIG. 1, the working machine 1 includes a steering device 11. The steering device 11 includes a steering wheel 11a, a steering shaft 11b (rotary shaft) that rotates as the steering wheel 11a is rotated, and an assist mechanism 11c (power steering mechanism) that assists in the steering of the steering wheel 11a.

The assist mechanism 11c includes a control valve 35, and a steering cylinder 32. The control valve 35 is, for example, a three-position switching valve that can be switched between positions by movement of a spool or the like. The control valve 35 can be also switched between positions by steering of the steering shaft 11b. The steering cylinder 32 is connected to arms (knuckle arms) 36 that change the direction of the front wheel 7F. Thus, when the steering wheel 11a is operated to rotate, the valve position and opening of the control valve 35 are changed in response to the operation, and the steering cylinder 32 extends or retracts to the left or right depending on the valve position and opening of the control valve 35. This allows the steering direction of the front wheel 7F to be changed.

The configuration of the steering device 11 described above is illustrative, and not limited to the above configuration. For example, in a case where the traveling device 7 is configured such that the propelling force at one side in the width direction and the propelling force at the other side in the width direction differ in magnitude to allow changing of the steering angle, the traveling device 7 may also function as the steering device 11.

As illustrated in FIG. 1, the working machine 1 includes a controller 20. The controller 20 includes one or more processors. The controller 20 is a controller for the working machine 1, and performs various controls related to the working machine 1. The controller 20 is communicably connected via an in-vehicle network such as CAN, ISOBUS, LIN, or FlexRay to various equipment or devices installed in the working machine 1. For example, based on a signal (operation signal) input from a manual operator, the controller 20 performs a control process (operation) for the working device 2, the prime mover 4, the transmission 5, the position changer 8A, the steering device 11, and the like.

The controller 20 includes one or more memories, various analog circuits, various digital circuits, and the like. The one or more memories store a software program to be executed by the one or more processors, and various data. The controller 20 may be configured to, by means of the one or more processors, read the software program from the one or more processors, and execute various processing based on the software program. The controller 20 may be configured to, by means of the one or more processors, execute various processing based on a predetermined logic circuit.

Examples of such a processor include a central processing unit (CPU), a graphics processing unit (GPU), a digital signal processor (DSP), a field programmable gate array (FPGA), and an application specific integrated circuit (ASIC).

The controller 20 may execute various processing by means of a plurality of physically separate processors cooperating with each other. That is, the controller 20 need not necessarily be configured as described above. In such a case, each of the processors is installed in the corresponding one of one or more computers that are physically separate from the working machine 1, and these processors are communicably connected via a network such as an in-vehicle network, a LAN, a WAN, or the Internet.

In an alternative configuration, the software program may be stored in a storing device (memory and/or storage) 21 (nonvolatile memory such as an HDD an SSD, a CD-ROM, or a DVD-ROM) communicably connected to the controller 20, or in the server 50, which is an external server connected via the above-mentioned network, and may be installed into the above-mentioned memory from the above-mentioned storing device or server.

As illustrated in FIG. 1, the working machine 1 includes one or more sensor assemblies 25. The sensor assembly 25 senses the surrounding area of the working machine 1. Specifically, the sensor assembly 25 performs sensing by measuring the distance to the environment in the surrounding area (an object in the surrounding area) of the working machine 1. The sensor assembly 25 includes a range sensor to perform ranging for at least a portion of the surrounding area of the working machine 1. The sensor assembly 25 is configured to perform ranging for at least a portion of the surrounding area of the working machine 1 to detect point cloud data representing the environment in the surrounding area of the working machine 1.

The sensor assembly 25 is connected to the controller 20 such that the sensor assembly 25 is capable of wired or wireless communication with the controller 20. The sensor assembly 25 outputs sensing results to the controller 20. The sensor assembly 25 includes an optical range sensor, a signal processing circuit, and the like. An example of the optical range sensor of the sensor assembly 25 may be a light detection and ranging (LiDAR) sensor.

A LiDAR sensor (laser sensor) emits pulsed measuring light (laser beam) from a light source such as a laser diode millions of times per second, and scans a predetermined detection range (a sensing range of, for example, 360 degrees) in the horizontal or vertical direction by causing the measuring light to reflect off a rotating mirror onto the detection range. The LiDAR sensor then receives, via a photodetector, light reflected from a target object. The signal processing circuit measures the distance to the target object based on the time taken until the reflection of the measuring beam emitted by the LiDAR sensor is received (time of flight (ToF) method).

An example of the optical range sensor of the sensor assembly 25 other than a LiDAR sensor may be a ToF camera. Although the above example is directed to the case where the sensor assembly 25 includes an optical range sensor, an acoustic range sensor (e.g., a sonar or other airborne ultrasonic acoustic sensor) may be used instead of an optical range sensor.

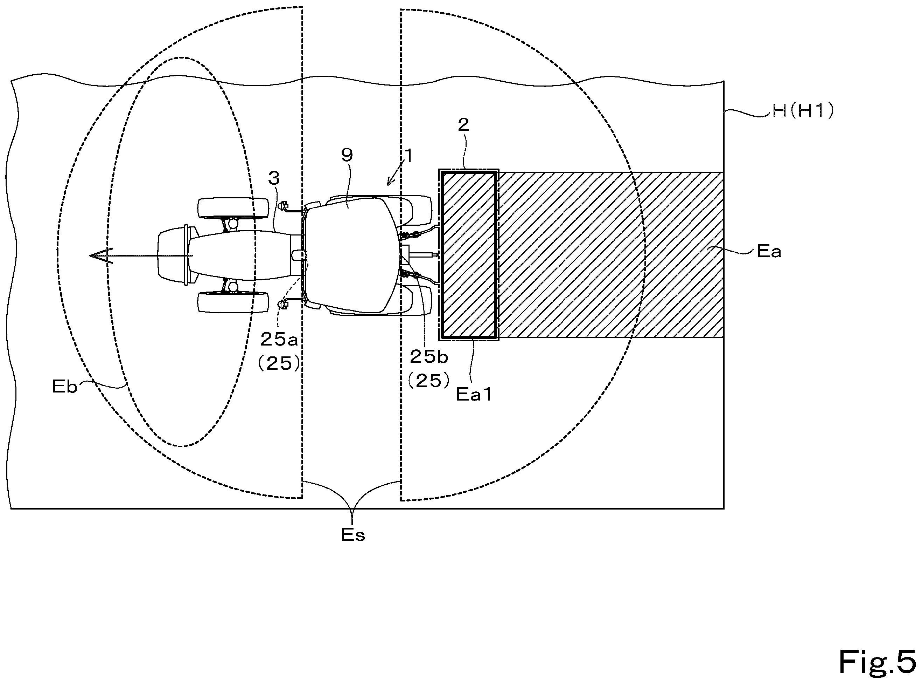

FIG. 5 illustrates an example of a sensing range Es to be sensed by one or more sensor assemblies 25 provided to the working machine 1. The one or more sensor assemblies 25 provided to the working machine 1 sense the sensing range Es. The sensing range Es includes at least a worked region Ea where the working machine 1 (the working device 2) has already performed work. The sensor assembly 25 also senses a position estimation range Eb, which is a range required for estimating the position of the working machine 1 to which the sensor assembly 25 is provided. An example of the position estimation range Eb may be a range in the direction of travel of the working machine 1.

FIG. 5 is merely an illustrative example of the sensing range Es. The sensing range Es, the worked region Ea, and the position estimation range Eb are not limited to those illustrated in FIG. 5. The distance that can be sensed by the sensor assembly 25 varies also depending on the range sensor to be used as the sensor assembly 25.

The working machine 1 performs work while traveling. Thus, a working range Ea1, which is an area that can be worked by the working machine 1 (area worked by the working device 2 of the working machine 1 at a predetermined position), moves as the working machine 1 travels. The working range Ea1 is, when the working machine 1 performs work while traveling, an area worked by the working device 2 at a predetermined position, in other words, at a predetermined point in time. That is, the working range Ea1 means an area where the working machine 1 at a predetermined position (point in time) acts on a target object (such as the agricultural field H1, a crop grown in the agricultural field H1, or weed in the agricultural field H1).

Thus, it can be said that the area left behind as the working range Ea1 moves following the movement of the working machine 1 appears as the worked region Ea on the work field H. The working range Ea1 corresponding to the current position of the working machine 1 is included in part of the worked region Ea. In other words, the working range Ea1 does not mean the entire range where a series of work operations to be performed by the working machine 1 in the work field H (the agricultural field H1) are performed.

Although the example in FIG. 5 depicts, for convenience of explanation, the working range Ea1 that has a rectangular or substantially rectangular shape in plan view, the shape of the working range Ea1 is not limited to this shape. The working range Ea1 differs depending on the type of the working device 2 or the kind of work to be performed by the working device 2, and thus may have a circular or substantially circular shape or an irregular shape. The working range Ea1 also differs depending on what object (where) the working device 2 performs work. That is, in a case where, as with a cultivator, a ridger, or a mower, the working device 2 performs work on the ground of the agricultural field H1, the working range Ea1 is located on the ground of the agricultural field H1. The worked region Ea thus refers to a region on the ground of the agricultural field H1 where the working device 2 has performed work. In a case where, as with a harvester for a fruit from a fruit tree, the working device 2 performs work on a work object other than the ground of the agricultural field H1, the working range Ea1 is located on the work object other than the ground, such as the fruit tree. The worked region Ea thus refers to a region where the working device 2 has performed work on such a work object. According to the embodiment, the working device 2 is a ridger, and the worked region Ea thus includes the ridge M1 formed by the ridger.

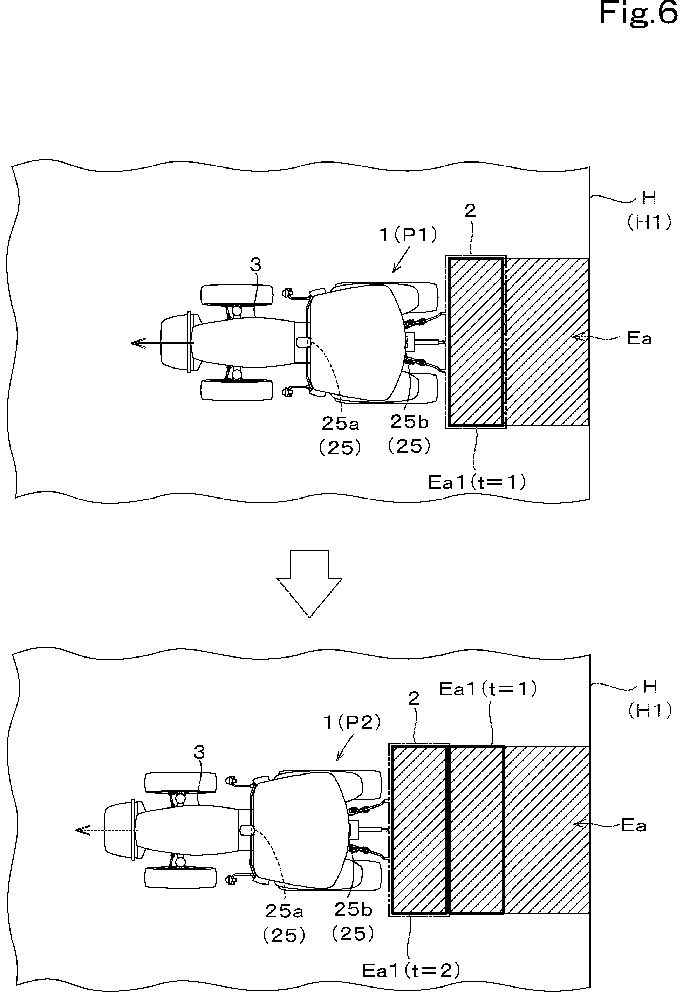

FIG. 6 illustrates the worked region Ea. Now, irrespective of how the working device 2 is positioned with respect to the working machine 1, when the working machine 1 performs work while traveling in a predetermined direction of travel, the working machine 1 moves away from the location that has already been worked on as the working machine 1 travels in the direction of travel. Thus, when the working machine 1 performs work at a predetermined first position P1, and then moves ahead in the direction of travel from the first position P1, the sensor assembly 25 mounted to the working machine 1 moves away from the working range Ea1 corresponding to the first position P1.

In so doing, as seen from the sensor assembly 25, the working machine 1 and/or the working device 2 pass through at least a portion of the working range Ea1 (t = 1) corresponding to the first position P1, and thus at a predetermined second position P2 located ahead of the first position P1 in the direction of travel, at least a portion of the working range Ea1 (t = 1) appears from behind the working machine 1 and/or the working device 2. In the example in FIG. 6, as the working machine 1 moves ahead (forward) in the direction of travel to the second position P2, the working range Ea1 (t = 1) appears in rear of the working device 2 as seen from the sensor assembly 25. It is thus preferable that one or more sensor assemblies 25 are configured to sense, as the sensing range Es, a range including an area opposite from the area located ahead in the direction of travel.

FIG. 5 illustrates an exemplary case where the working device 2 is mounted to a rear portion of the traveling vehicle body 3 and the sensor assembly 25 senses an area rearward of the working machine 1 and the working device 2. In this case, of the sensing range Es, the range including an area opposite from the area located ahead in the direction of travel is not limited to one located rearward of the working machine 1 and the working device 2. One example of such a case is when the working device 2 is mounted to the traveling vehicle body 3 with the working device 2 being offset in the width direction relative to the traveling vehicle body 3, in other words, when the working range Ea1 is offset in the width direction relative to the traveling vehicle body 3. In this case, of the sensing range Es, the range including an area opposite from the area located ahead in the direction of travel includes the working range Ea1 that is offset in the width direction relative to the traveling vehicle body 3.

According to the embodiment, the working machine 1 travels in the forward direction or the rearward direction. Thus, the sensor assembly 25 is configured to sense, as a range in the surrounding area of the working machine 1, a range including at least an area forward of the working machine 1 and an area rearward of the working machine 1. In the example in FIGS. 2 and 3, the working machine 1 is provided with two sensor assemblies 25, of which one sensor assembly 25 (a first sensor assembly 25a) senses the forward area, and the other sensor assembly 25 (a second sensor assembly 25b) senses the rearward area. For example, the first sensor assembly 25a is provided at a front portion of a roof 9a of the cabin 9A. The second sensor assembly 25b is provided at a rear portion of the roof 9a.

The first sensor assembly 25a masks a region where devices and/or equipment provided to the working machine 1, such as the cabin 9A including the roof 9a, would be otherwise detected. Thus, the first sensor assembly 25a senses a range (e.g., 180 degrees) forward of or substantially forward of the working machine 1, and detects point cloud data of the corresponding sensing range Es.

The second sensor assembly 25b masks a region where devices and/or equipment provided to the working machine 1, such as the cabin 9A including the roof 9a, would be otherwise detected. At this time, the second sensor assembly 25b may acquire the position of the working device 2 coupled to the position changer 8A, and may mask a region where the working device 2 would be otherwise detected. Thus, the second sensor assembly 25b senses a range (e.g., 180 degrees) rearward of or substantially rearward of the working machine 1, and detects point cloud data of the corresponding sensing range Es.

The above-mentioned configuration according to the embodiment allows the first sensor assembly 25a and the second sensor assembly 25b to perform sensing over a substantially 360-degree range around the working machine 1. It may suffice that the working machine 1 is provided with one or more sensor assemblies 25, and that the one or more sensor assemblies 25 are configured to sense the surrounding area of the working machine 1. The sensing range Es is not limited to the substantially 360-degree range around the working machine 1. Further, the mounting position for the sensor assembly 25 is not limited to the above-mentioned position. For example, the sensor assembly 25 may be mounted to a forward portion or upper portion of the hood. In FIG. 5, the sensing range Es may include a blind spot, and although the sensing range Es is the substantially 360-degree range around the working machine 1, the sensing range Es is not limited to such a range. According to the embodiment, the working device 2 is a ridger. Thus, the sensing range Es may simply be a range that allows detection of at least the formed object M (e.g., the ridge M1). Although the sensing range Es in this case is a range that is located at the same side of the working machine 1 as where the working device 2 is placed, and that covers, for example, substantially 180 degrees in the rearward direction around the working machine 1, the sensing range Es may instead cover 90 degrees or the like in the rearward direction around the working machine 1. That is, the range covered by the sensing range Es is not limited to such values. The second sensor assembly 25b acquires point cloud data at least representing one or more geographical features in the surrounding area of the working device 2. More specifically, the second sensor assembly 25b acquires point cloud data representing one or more geographical features of the agricultural field H1 including the ridge M1 formed by the working device 2 (ridger).

As illustrated in FIG. 1, the working machine 1 includes an imager 26. The imager 26 is a charge coupled device (CCD) camera incorporating a CCD image sensor, a complementary metal oxide semiconductor (CMOS) camera incorporating a CMOS image sensor, or the like. The imager 26 is provided at a rear portion of the roof 9a. The imager 26 captures an image of an area rearward of the working machine 1, and the captured image includes the ridge M1 formed by the working device 2 (ridger) on the agricultural field H1. The second sensor assembly 25b and the imager 26 are placed at a rear portion of the roof 9a and side by side in a vertical or horizontal or substantially vertical or horizontal direction in proximity to each other. Thus, the point cloud data of the sensing range Es detected by the second sensor assembly 25b, and the image captured by the imager 26 are obtained from the same or substantially the same measuring point (viewpoint).

In a case where a ROPS is provided as the protective structure 9, a single sensor assembly 25 may be provided at an upper portion of the ROPS. A pair of sensor assemblies 25 may be provided to a mounting structure that is extended outward in the width direction of the traveling vehicle body 3 from each of front and rear portions of the traveling vehicle body 3, such that at each of the front and rear portions of the traveling vehicle body 3, the sensor assemblies 25 are placed at positions spaced apart outward in the width direction from the traveling vehicle body 3. Further, one or more sensor assemblies 25 may be provided to the working device 2 that is detachably attached to the traveling vehicle body 3. The second sensor assembly 25b and the imager 26 are placed at an upper portion of the ROPS and side by side in the vertical or horizontal or substantially vertical or horizontal direction in proximity to each other.

As illustrated in FIG. 1, the evaluation system S of the working machine 1 includes the position estimator 20a to estimate the position of the working machine 1 based on sensing results obtained from the sensor assembly 25. In one example, the position estimator 20a is a software program implemented on the controller 20. In another example, in a case where the working machine 1 is connected to an information processor such as the external server 50 such that the working machine 1 is directly or indirectly communicable with the information processor, the position estimator 20a may be provided in the external server 50 or the like external to the working machine 1. Hereinafter, an exemplary case will be described in which the position estimator 20a is provided in the controller 20 (the working machine 1), and other examples will not be described in detail.

The position estimator 20a estimates the position of the working machine 1 based on sensing results obtained from the sensor assembly 25 and environmental map information. The position estimator 20a estimates the position based on the sensing results obtained from the sensor assembly 25 (a range signal obtained from the range sensor), the environmental map information, and a simultaneous localization and mapping (SLAM) algorithm.

The environmental map information is map information indicating an object present in the surrounding environment of the work field H including the work field H where the working machine 1 performs work. The environmental map information is generated based on point cloud data. By way of example, a case is now described where the work field H is the agricultural field H1 and the environmental map information represents the surrounding environment of the agricultural field H1 including the agricultural field H1. In this case, the environmental map information represents, in the form of a three-dimensional point cloud, the ground in the surrounding area of the agricultural field H1, a crop grown in the agricultural field H1, the ridge M1 formed on the agricultural field H1, a furrow around the agricultural field H1, a fence enclosing the agricultural field H1, weed growing on the ground in the surrounding area of the agricultural field H1, and a barn located in the surrounding area of the agricultural field H1. The environmental map information is generated in advance based on the sensing results obtained from the sensor assembly 25, and stored in the storing device 21. The environmental map information to be stored in the storing device 21 may be one generated based on sensing results obtained from the sensor assembly 25 of another working machine 1 or the like.

In estimating the position of the working machine 1, the position estimator 20a acquires point cloud data (detection-point cloud data) from sensing results obtained from the sensor assembly 25 of the working machine 1, and positions (matches) the acquired detection-point cloud data with respect to the point cloud data of the environmental map information to estimate the position of the working machine 1. In estimating the position of the working machine 1, the position estimator 20a estimates a predetermined position on the working machine 1.

The position estimator 20a may perform estimation (position estimation) of the position (an estimated position EP) of the working machine 1 (the traveling vehicle body 3) with reference to the position of a position detector 27, which is detected by the position detector 27 itself by using a satellite positioning system (positioning satellite) such as D-GPS, GPS, GLONASS, BeiDou, Galileo, or Michibiki, that is, with reference to the position (e.g., the latitude and the longitude) of a GPS antenna. In this case, the position estimator 20a may be configured to use the position (e.g., the latitude and the longitude) of the position detector 27 detected by the position detector 27 itself, and not use the sensing results obtained from the sensor assembly 25 and the environmental map information.

As illustrated in FIG. 1, the controller 20 includes the automatic operation controller 20b. The automatic operation controller 20b includes an electric/electronic circuit provided to the controller 20, the CPU, a program stored in the memory, and the like.

The automatic operation controller 20b controls the automatic operation of the working machine 1 (hereinafter referred to as "automatic operation control"). The automatic operation controller 20b is configured to perform both a line-based automatic operation control and/or an autonomous-type automatic operation control. In the case of line-based automatic operation control, the automatic operation controller 20b controls various constituent equipment and devices of the working machine 1 based on the estimated position EP and based on a predefined planned travel route L, such that the traveling vehicle body 3 travels along the planned travel route L. For example, the automatic operation controller 20b controls, as part of the automatic operation control, the steering angle and travel speed (vehicle speed) of the traveling vehicle body 3.

The planned travel route L may be pre-sored in the storing device 21, or may be created (defined) based on the estimated position EP estimated by the position estimator 20a during actual travel of the working machine 1. The planned travel route L may be created based on information input via an input interface.

The input interface is, for example, a display 15 provided to the working machine 1 and configured to accept an input operation. In addition to a display screen displaying a screen, the display 15 includes, for example, a touchpad or a hardware switch. The input interface may be any input interface configured to accept an input operation for information and allow the input information to be acquired by the controller 20. The input interface may be a terminal that can be operated, such as a smartphone, and that is communicably connected to the controller 20. The input interface may be a communicator configured to communicate with the external server 50 or the like, and the communicator may receive the planned travel route L managed by the external server 50 or the like.

The automatic operation controller 20b controls the steering angle during automatic operation control, such that the positional deviation between the estimated position EP and the planned travel route L is less than a threshold. That is, when the positional deviation between the estimated position EP and the planned travel route L is less than the threshold, the automatic operation controller 20b controls the control valve 35 of the steering device 11 to maintain the steering angle. When the positional deviation between the estimated position EP and the planned travel route L is equal to or greater than the threshold, the automatic operation controller 20b controls the control valve 35 of the steering device 11 to change the steering angle such that the positional deviation decreases.

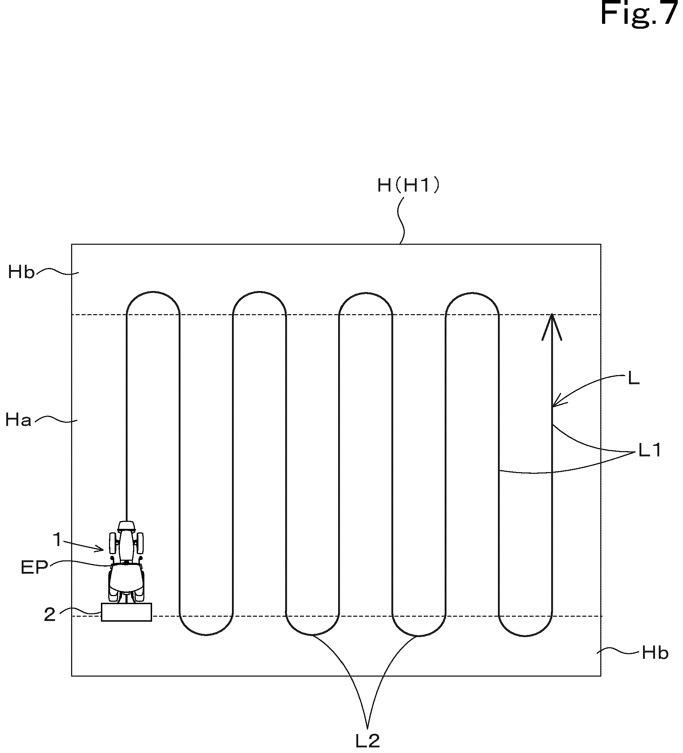

An automatic operation control will now be described with reference to a case where the working machine 1 performs work within the agricultural field H1. The automatic operation controller 20b performs, for example, an automatic operation control such that the working machine 1 travels back and forth between one end and the other end of the work field H (the agricultural field H1). FIG. 7 illustrates the planned travel route L. As illustrated in FIG. 7, the planned travel route L on the agricultural field H1 includes at least one straight section L1, and at least one turn section L2. The straight section L1 extends from one edge of the agricultural field H1 to the opposite edge. The turn section L2 connects one straight section L1 and another straight section L1.

The automatic operation controller 20b may, based on the position and/or the like of the working machine 1 on the planned travel route L, control the working device 2 and/or the position changer 8A to control the work performed by the working device 2. The automatic operation controller 20b is configured to control the execution and stoppage of the work performed by the working device 2. The automatic operation controller 20b enables switching between the working state in which the working device 2 performs work and the non-working state in which the working device 2 does not perform work, by controlling the drive of the position changer 8A (raising/lowering device) and/or the drive of the PTO shaft 6.

The switching mentioned above will now be described with reference to an exemplary case where, as with a cultivator or a ridger, the working device 2 is configured to be towed by the working machine 1 to perform work while making contact with or digging into the ground. In this case, the automatic operation controller 20b is configured to switch the working device 2 to the working state by causing the position changer 8A to lower the working device 2 onto the ground, and switch the working device 2 to the non-working state by causing the position changer 8A to raise the working device 2 from the ground.

In a case where, as with a rotary tiller or a baler, the working device 2 is configured to be driven by power transmitted from the PTO shaft 6 or driven by a built-in actuator (e.g., an electric actuator), the automatic operation controller 20b is configured to switch between the working state and the non-working state by controlling such a power source (the PTO shaft 6, the actuator, or the like).

The automatic operation controller 20b is configured to, for example, switch to the working state when the estimated position EP is located in the straight section L1, and switch to the non-working state when the estimated position EP is located in the turn section L2.

The switching between the working state and the non-working state may be performed by the automatic operation controller 20b based not on the estimated position EP along the planned travel route L, but on a region defined within the agricultural field map. For example, a region where work is performed (a work region Ha) is defined as a region of the agricultural field H1 located inward of the headland. A region where work is not performed (a non-work region Hb) is defined as a region of the agricultural field H1 such as the headland, the entrance/exit of the agricultural field H1, and/or an area that has already been worked on. The work region Ha and the non-work region Hb are merely illustrative. In another example, the work region Ha may include the headland.

The automatic operation according to the embodiment has been described above by way of example of the line-based automatic operation control. In the case of the autonomous-type automatic operation control, the automatic operation controller 20b controls various constituent equipment and devices of the working machine 1 such that work is performed within the agricultural field H1, based not on the planned travel route L but on the estimated position or sensing results.

The working machine 1 may include the display 15 that, based on the estimated position EP estimated by the position estimator 20a and based on the agricultural field map representing the agricultural field H1, displays the current position of the working machine 1 on the agricultural field map. The display 15 may be a display placed in the surrounding area or the like of the operator's seat 10 of the working machine 1, or may be a mobile terminal carried by the operator, or an administrator terminal or the like that monitors the work being performed by the working machine 1. Examples of the mobile terminal and the administrator terminal may include terminals such as smartphones (multi-function mobile phones), tablet computers, or PDAs, and stationary computers such as personal computers.

The working machine 1 includes a communicator 29. The communicator 29 is a communication module to communicate either directly or indirectly with the server 50. For example, the communicator 29 is configured to perform wireless communication via Wi-Fi (Wireless Fidelity) (registered trademark) based on the IEEE 802.11 series, which is a communication standard, Bluetooth Low Energy (BLE) (registered trademark), Low Power, Wide Area (LPWA), and Low-Power Wide-Area Network (LPWAN). The communicator 29 is configured to, for example, perform wireless communication via a mobile phone network or a data communication network.

The server 50 includes a communicator 51, and a storing device (memory and/or storage) 52. Similarly to the communicator 29, the communicator 51 is a communication module to communicate with the working machine 1 either directly or indirectly. The communicator 51 is configured to, for example, perform wireless communication via a mobile phone network or a data communication network.

As illustrated in FIG. 1, the evaluation system S of the working machine 1 includes the arithmetic processor 20c. The arithmetic processor 20c performs determination about a formation abnormality in formation of the formed object M (e.g., the ridge M1) formed by the working device 2 on the agricultural field H1, based on an image C (e.g., an elevation image C) of the formed object M (e.g., the ridge M1). For example, as the processor of the controller 20 executes an evaluation program, the controller 20 functions as the arithmetic processor 20c. It can be said that performing of processing by the arithmetic processor 20c is synonymous with functioning of the controller 20. The arithmetic processor 20c is, for example, a software program implemented on the controller 20. In a case where the working machine 1 is connected to the external server 50 or the like such that the working machine 1 is directly or indirectly communicable with the external server 50 or the like, the arithmetic processor 20c may be provided in the external server 50 or the like external to the working machine 1. Hereinafter, an exemplary case will be described in which the arithmetic processor 20c is provided in the controller 20 (the working machine 1), and other cases will not be described in detail.

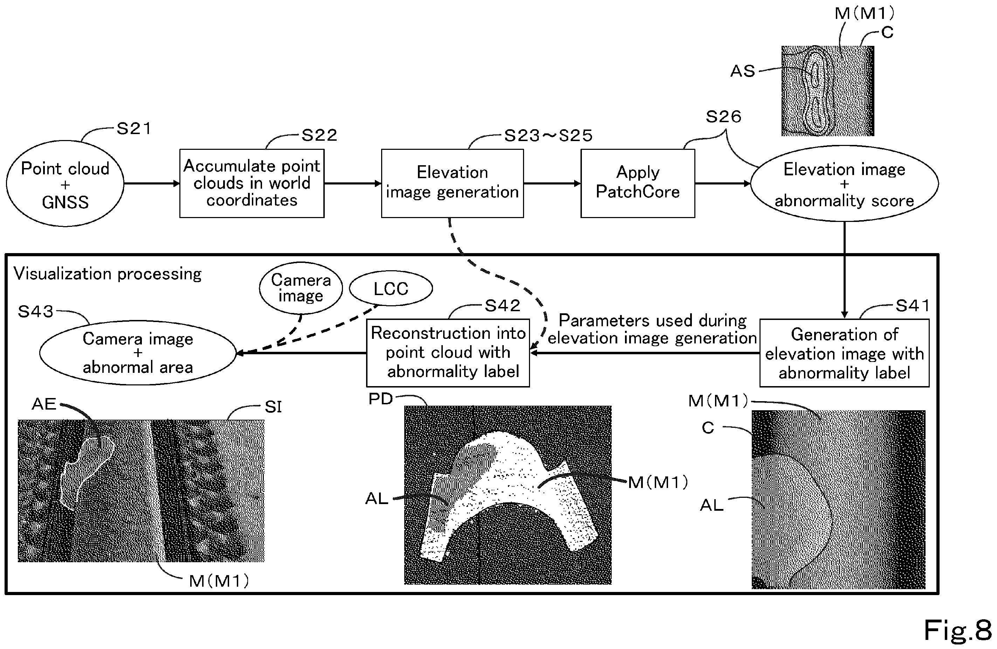

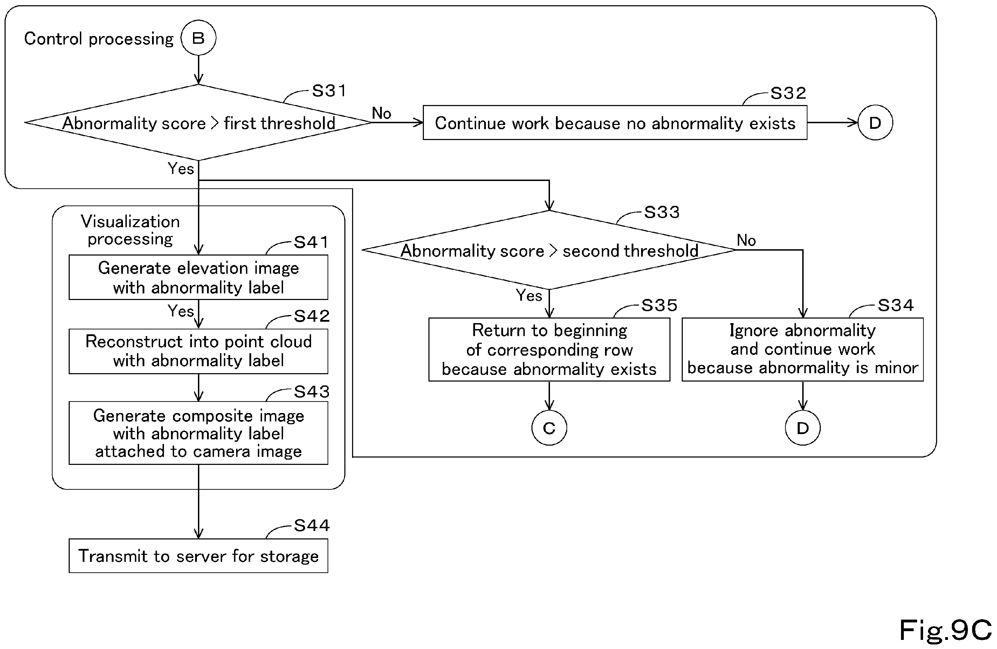

FIG. 8 illustrates an example of a series of processing to be performed by the arithmetic processor 20c. The series of processing include acquisition of point cloud data, elevation image generation, determination about a formation abnormality, and visualization processing (see FIG. 8), as well as control processing based on a formation abnormality (control processing in FIG. 9C, which will be described later).

First, upon satisfaction of a detection condition for the formed object M, the arithmetic processor 20c acquires point cloud data including the formed object M on the agricultural field H1. Specifically, the arithmetic processor 20c acquires point cloud data within a region-of-interest K together with position information of the working machine 1. This corresponds to "point cloud + GNSS" in FIG. 8. The arithmetic processor 20c then generates the elevation image C including the formed object M from the acquired point cloud data. This corresponds to "accumulate point cloud in world coordinates" and "elevation image generation" in FIG. 8. The arithmetic processor 20c performs determination about a formation abnormality in formation of the formed object M based on the elevation image C. This corresponds to "apply PatchCore" and "elevation image + abnormality score" in FIG. 8. The arithmetic processor 20c then performs visualization processing for the formed object M determined to include a formation abnormality (see visualization processing in FIG. 8). The arithmetic processor 20c also performs control processing based on the formation abnormality (see the control in FIG. 9C described later). The visualization processing for the formed object M, and the control processing based on the formation abnormality may be performed concurrently or serially. The arithmetic processor 20c may perform the control processing based on the formation abnormality after performing the visualization processing for the formed object M, or may perform these pieces of processing in the reverse order. The image C to be generated by the arithmetic processor 20c may be an image other than the elevation image C, such as a color image or near-infrared image including the formed object M.

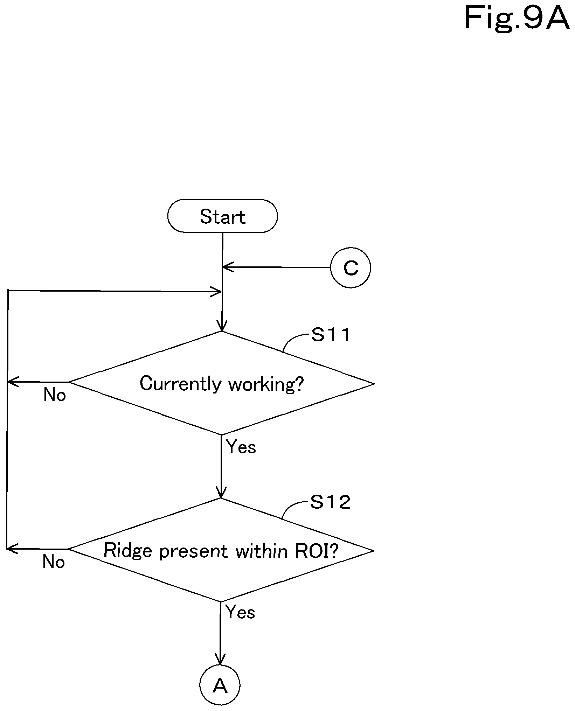

The series of processing to be performed by the arithmetic processor 20c illustrated in FIG. 8 will now be described in more detail with reference to FIGS. 9A to 9C. FIG. 9A is a flowchart illustrating an example of determination processing for determining whether a detection condition for the formed object M is satisfied. That is, the determination processing in FIG. 9A, which determines whether a detection condition for the formed object M is satisfied, is the starting point for the series of processing to be performed by the arithmetic processor 20c.

The arithmetic processor 20c determines that the detection condition is satisfied when the work to be performed by the working device 2 has been started and the formed object M (e.g., the ridge M1) is included in the region-of-interest K (ROI).

Specifically, as illustrated in FIG. 9A, the arithmetic processor 20c determines whether the working device 2 is currently performing work (S11). The arithmetic processor 20c (the controller 20) determines that the working device 2 is currently performing work when, based on a signal on an in-vehicle CAN network, the rotation speed of the power take-off (PTO) (the rotation speed of the PTO shaft 6) is equal to or greater than a predetermined rotation speed, and the detection value from a sensor relating to the lift arm 8a is equal to or greater than a threshold (e.g., a value indicating that the working device 2 is in the working position (the lowered position for performing ridging)) (S11: Yes). The arithmetic processor 20c may use other determination methods, such as determining that the working device 2 is currently performing work based on only either the rotation speed of the PTO shaft 6 or the detection value from the sensor associated with the lift arm 8a, or determining that the working device 2 is currently performing work when the detection value of the sensor associated with the lift arm 8a is equal to or greater than the threshold (e.g., the value indicating that the working device 2 is in the working position (the lowered position for performing ridging)) and the working machine 1 is traveling (e.g., the vehicle speed of the traveling vehicle body 3 is equal to or greater than a predetermined speed). The predetermined rotation speed and the threshold differ depending on the type of the working machine 1, the type of the working device 2, and the like. When the working device 2 is not currently performing work (S11: No), the arithmetic processor 20c returns to S11.

When the working device 2 is currently performing work (S11: Yes), the arithmetic processor 20c determines, for all pieces of point cloud data acquired by the second sensor assembly 25b, whether the formed object M (e.g., the ridge M1) is included in the region-of-interest K (ROI) (S12). The arithmetic processor 20c determines that the detection condition is satisfied when the formed object M (e.g., the ridge M1) is included in the region-of-interest K (ROI) (S12: Yes). When the formed object M (e.g., the ridge M1) is not included in the region-of-interest K (ROI) (S12: No), the arithmetic processor 20c returns to S11. The arithmetic processor 20c may determine that the detection condition is satisfied when a predetermined distance has been traveled by the working machine 1 since the start of work performed by the working device 2 (S12: Yes). Specifically, the arithmetic processor 20c is configured to determine that the formed object M (e.g., the ridge M1) is included in the region-of-interest K (ROI), in order words, the detection condition is established (S12: Yes), when the working device 2 is currently performing work (S11: Yes) and the predetermined distance has been traveled by the working machine 1 since the start of work performed by the working device 2. In one non-limiting example, the predetermined distance ranges from 1 to several meters. When the predetermined distance has not been traveled by the working machine 1 (S12: No), the arithmetic processor 20c returns to S11.

The arithmetic processor 20c is configured to, in determining whether the ridge M1 is included in point cloud data within the region-of-interest K, in other words, in extracted point cloud data extracted from the region-of-interest K, determine whether the ridge M1 is included based on, for example, matching between the extracted point cloud data and a point cloud pattern that represents the ridge M1.

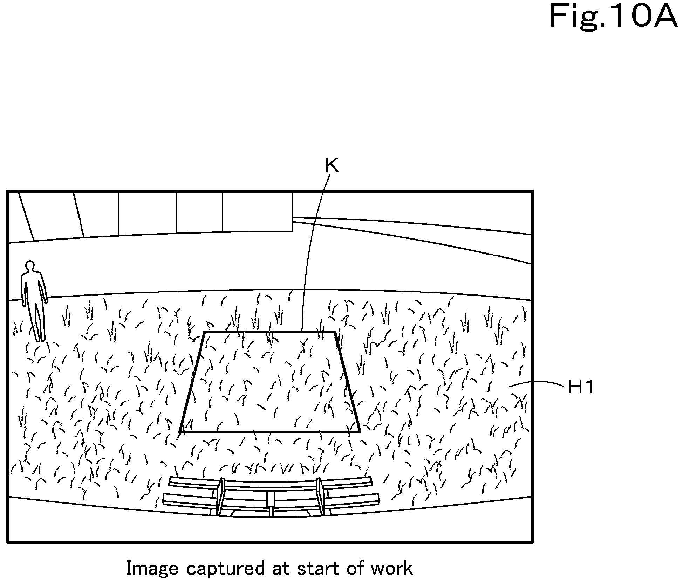

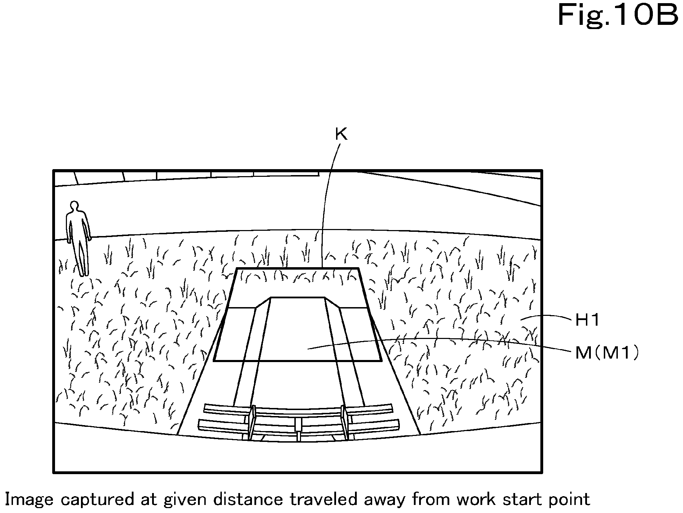

FIG. 10A illustrates an example of an image captured at the start of work. At the start of work performed by the working device 2, no ridge M1 has been formed on the agricultural field H1. Thus, as illustrated in FIG. 10A, the imager 26 acquires a captured image representing the agricultural field H1 with no ridge M1 formed thereon. No ridge M1 exists in the region-of-interest K at this time. FIG. 10B illustrates an example of an image captured at a given distance traveled away from a work start point. At this time, a predetermined distance has been traveled by the working machine 1 since the start of work performed by the working device 2, and thus the ridge M1 has been formed on the agricultural field H1. As illustrated in FIG. 10B, the imager 26 acquires, for example, a captured image representing the agricultural field H1 with a trapezoidal ridge M1 formed thereon. The ridge M1 need not necessarily have a trapezoidal shape but may have a semi-cylindrical shape or the like. The ridge M1 exists in the region-of-interest K at this time.

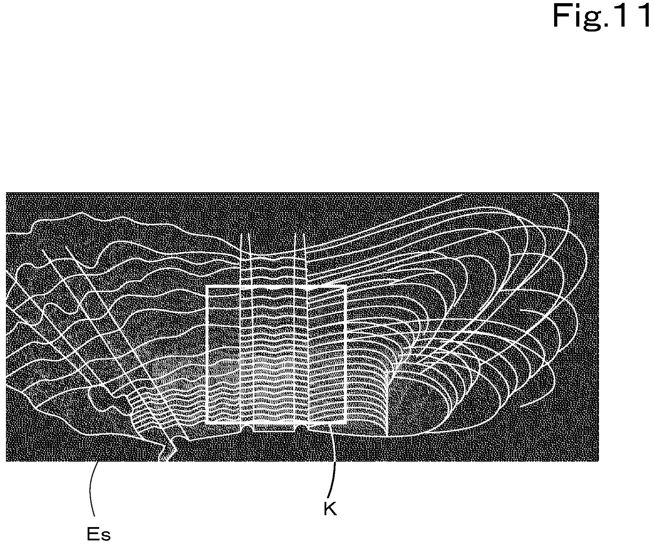

The second sensor assembly 25b acquires point cloud data including the formed object M on the agricultural field H1. FIG. 11 illustrates the relationship between the region-of-interest K and all pieces of point cloud data obtained by the second sensor assembly 25b. For the entire sensing range Es in FIG. 11, a very large amount of point cloud data exists (e.g., 450, 000 points per second), and thus processing all the pieces of point cloud data may require considerable computation time, which may compromise real-time performance. Thus, to exclude unnecessary point cloud data, the arithmetic processor 20c defines the region-of-interest K within a range including the ridge M1, and extracts the point cloud data of the region-of-interest K. As a result, as for the region-of-interest K, the amount of point cloud data is reduced to about one-half to one-third of the original total amount of point cloud data. The amount of point cloud data may, however, be further reduced.

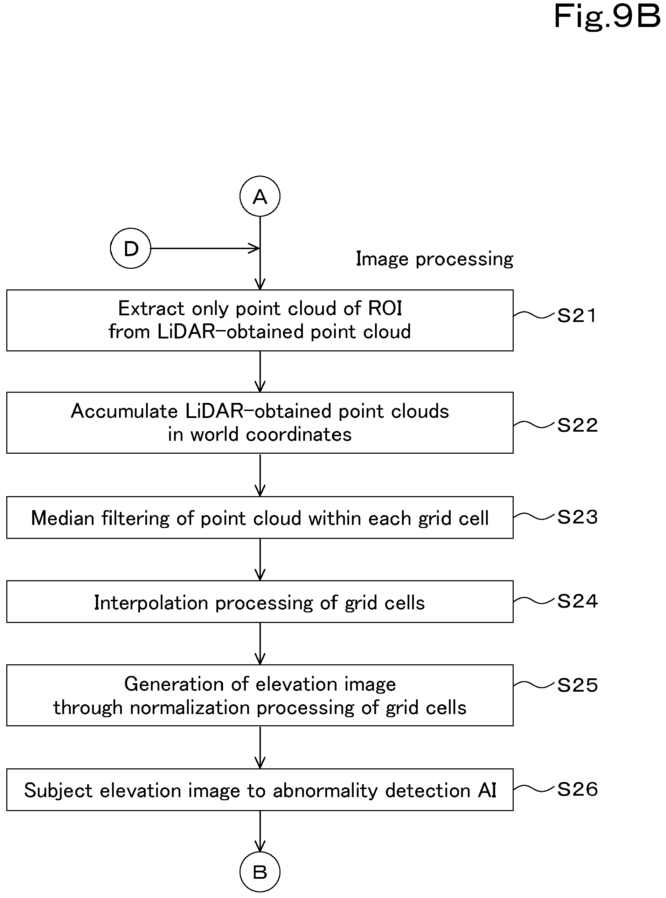

The arithmetic processor 20c generates the elevation image C by subjecting, to image processing, extracted point cloud data extracted from the region-of-interest K of point cloud data. FIG. 9B is a flowchart illustrating an example of elevation image generation and an example of abnormality detection processing. Specifically, upon satisfaction of the detection condition for the formed object M (S12: Yes), the arithmetic processor 20c starts the image processing illustrated in FIG. 9B, and acquires only the point cloud data of the region-of-interest K (S21). That is, only the point cloud of the ROI is extracted from the point cloud obtained by LiDAR. The image processing may include predetermined processing on the extracted point cloud data, or predetermined processing may be performed on the extracted point cloud data before or after the image processing.

The arithmetic processor 20c stores position information representing a position estimated by the position estimator 20a, and the extracted point cloud data of the region-of-interest K such that the position information and the extracted point cloud data are associated with each other. The arithmetic processor 20c converts, based on the position information, pieces of extracted point cloud data extracted from a plurality of regions-of-interest K into a world coordinate system from the coordinate system of the sensor assembly 25, the regions-of-interest K being different in terms of the position of the traveling vehicle body 3. In this way, the arithmetic processor 20c combines the pieces of extracted point cloud data of the plurality of regions-of-interest K in the world coordinate system (S22).

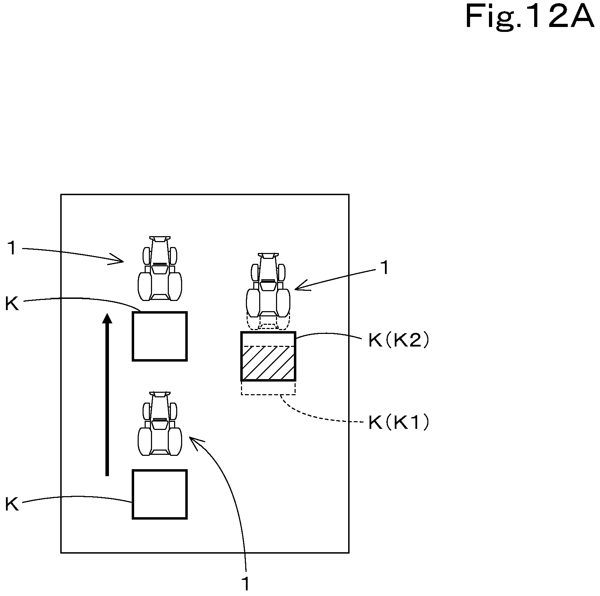

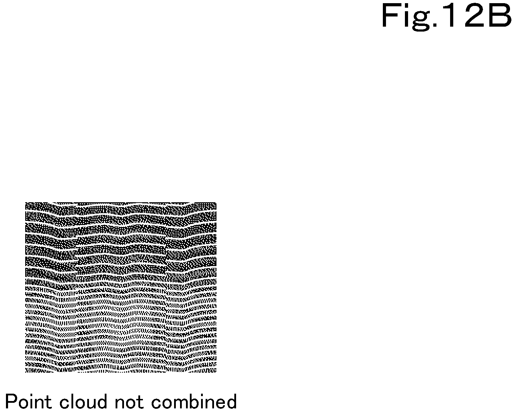

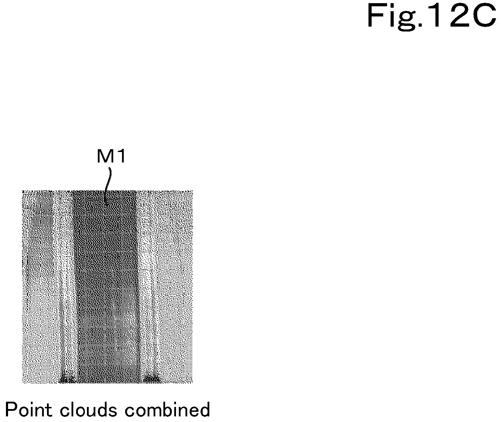

FIG. 12A illustrates movement of the region-of-interest K associated with the movement of a tractor, and superimposition of two regions-of-interest K that differ in terms of the position of the tractor. As illustrated in the left-hand portion of FIG. 12A, as the working machine 1 moves (travels straight ahead), the position of the region-of-interest K moves. As illustrated in the right-hand portion of FIG. 12A, the region-of-interest K corresponding to the position of the working machine 1 at a given point in time (a region K2 represented by a solid line), and the region-of-interest K corresponding to the position of the working machine 1 at a time 0.1 seconds earlier than the given point in time (a region K1 represented by a dashed line) partially overlap (the overlapping portion is represented by hatching). FIG. 12B illustrates an example of point cloud data without superimposition of the regions-of-interest K. The point cloud data without superimposition of the regions-of-interest K illustrated in FIG. 12B, that is, point cloud data from a single region-of-interest K at the given point in time or 0.1 seconds earlier than the given point in time exhibits many horizontal streaks, and the shape of the ridge M1 appears blurred. FIG. 12C illustrates an example of point cloud data with superimposition of the regions-of-interest K. The point cloud data with superimposition of the regions-of-interest K illustrated in FIG. 12C exhibits fewer horizontal streaks, and the shape of the ridge M1 is clearly visible. That is, the superimposition of the regions-of-interest K in FIG. 12C is performed at S22.

The arithmetic processor 20c generates the elevation image C which is a planar image in a predetermined plane of the world coordinate system obtained from the combined pieces of extracted point cloud data in the world coordinate system (S23 to S25). Specifically, the arithmetic processor 20c sequentially performs the following pieces of processing: median filtering of point cloud within each grid cell (S23), interpolation processing of grid cells (S24), and image generation through normalization processing of grid cells (S25).

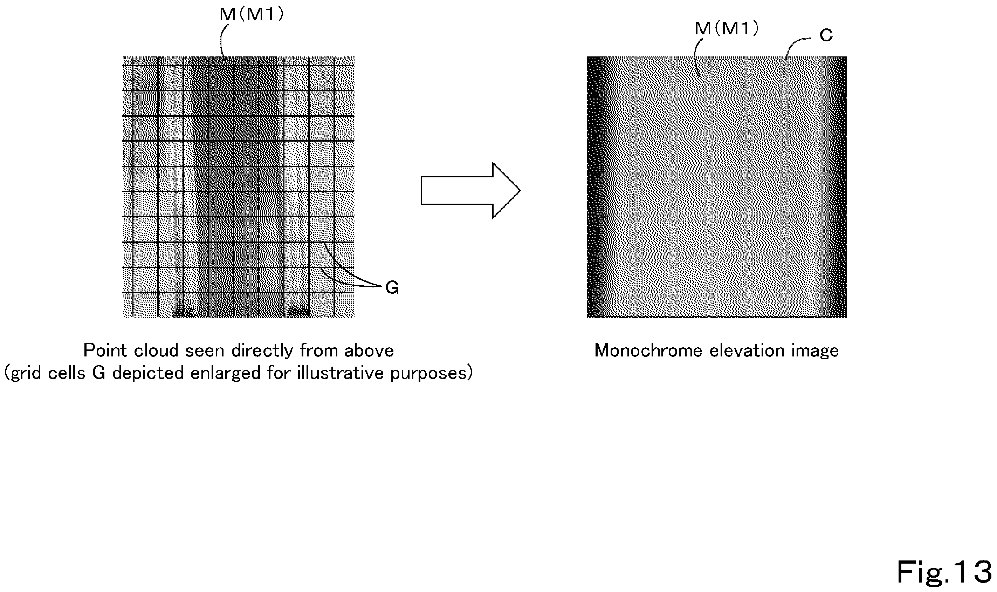

FIG. 13 illustrates mapping of pieces of extracted point cloud data onto the elevation image C. The arithmetic processor 20c divides point clouds accumulated in the world coordinate system into grid cells G of squares in a predetermined plane (xy-plane) illustrated in the left-hand portion of FIG. 13. Each of the grid cells G corresponds to a pixel of an image. The grid cell G has a size of, for example, 1 cm by 1 cm. However, the grid cell G need not necessarily have this size, and may be, for example, a rectangle. When a plurality of points (point cloud data) exist for a single grid cell G, the arithmetic processor 20c uses the median z-value (S23). The arithmetic processor 20c applies interpolation for a grid cell G with no point (point cloud data) (S24). Once a single z-value (elevation value) has been assigned to each grid cell G, the arithmetic processor 20c normalizes the z-value to an integer ranging from 0 to 255 to allow conversion into an image (S25). The arithmetic processor 20c performs S23 to S25 also for all the remaining grid cells. Through S23 to S25, the point cloud data in the left-hand portion of FIG. 13 is converted into a monochrome elevation image C in the right-hand portion of FIG. 13.

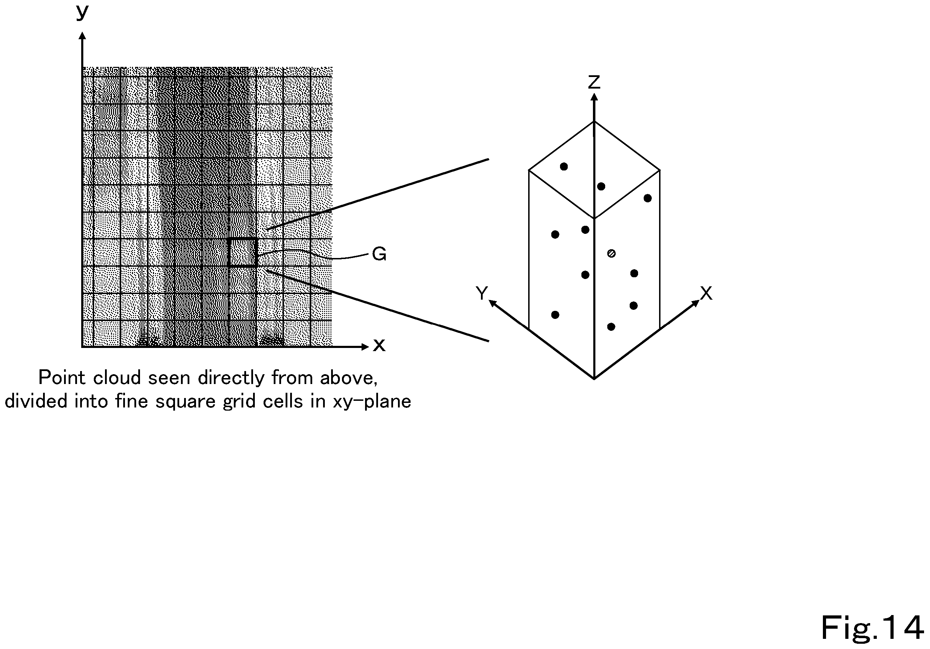

FIG. 14 illustrates median filtering of the grid cells G. A voxel obtained by enlarging a single grid cell G is illustrated in the right-hand portion of FIG. 14. Since the point cloud is divided by grid cells G on the xy-plane in the three-dimensional space, such a voxel is obtained. As illustrated in FIG. 14, the arithmetic processor 20c uses the median of the z-values of the points (point cloud data) within the voxel as the value representing the voxel (the grid cell G) (S23). The arithmetic processor 20c may use the mean of the z-values of the points (point cloud data) within the voxel as the value representing the voxel (the grid cell G) (S23).

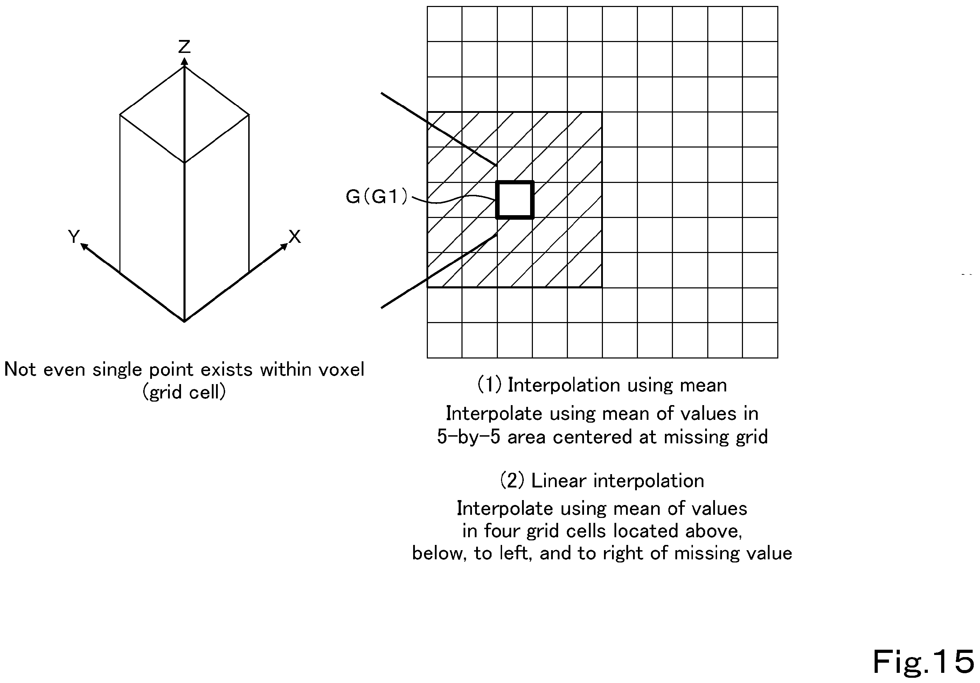

FIG. 15 illustrates interpolation processing of the grid cells G. The left-hand portion of FIG. 15 illustrates a case where not even a single point (point cloud data) exists within a voxel (grid cell G). The arithmetic processor 20c performs, for example, interpolation by using a mean (S24). That is, as illustrated in the right-hand portion of FIG. 15, the arithmetic processor 20c performs interpolation by using the mean of the values in a 5-by-5 area centered at the missing grid cell G1. The 5-by-5 area may be a 3-by-3 area, a 7-by-7 area, or the like. The arithmetic processor 20c may perform linear interpolation (S24). That is, the arithmetic processor 20c performs interpolation by using the mean of the values in the four grid cells G located above, below, to the left, and to the right of the missing value (missing grid cell). When the values of the four grid cells G located above, below, to the left, and to the right of the missing value are all missing, the processor performs interpolation by using a mean, because performing linear interpolation in this case does not result in accurate interpolation. In addition to interpolation using a mean or linear interpolation, the arithmetic processor 20c may perform interpolation by methods such as spline interpolation or nearest-neighbor interpolation.

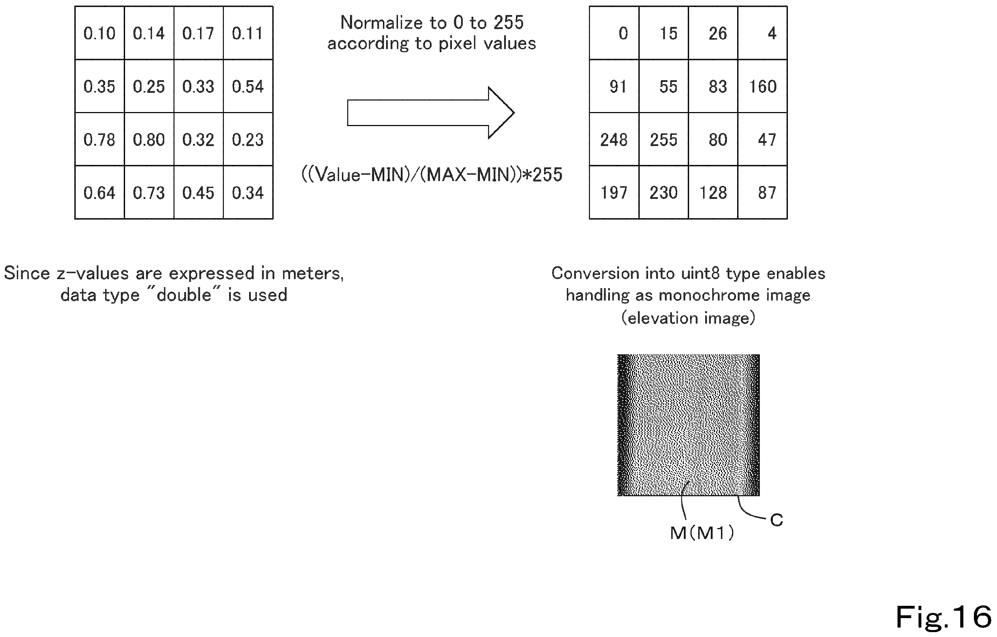

FIG. 16 illustrates normalization processing of the grid cells G. As illustrated in FIG. 16, the arithmetic processor 20c performs normalization to values ranging from 0 to 255 in accordance with the pixel values of the grid cells G (S25). That is, the arithmetic processor 20c normalizes the pixel values of the grid cells G to integers ranging from 0 to 255.

As illustrated in FIG. 9B, the arithmetic processor 20c subjects the elevation image C to abnormality detection processing (S26). The arithmetic processor 20c performs the abnormality detection processing which includes calculating the degree of deviation of a portion of the elevation image C from a normal image C1. The normal image C1 is an image representing the shape of a normal formed object. The arithmetic processor 20c performs the abnormality detection processing which includes calculating an abnormal region in which the portion of the elevation image C deviates from the normal image C1, and generates the elevation image C with the abnormal region.

The abnormality detection processing may use, for example, abnormality detection artificial intelligence (AI). In this case, for example, PatchCore in FIG. 8 is used as the abnormality detection AI. PatchCore is a method for detecting an abnormal portion of an image by using a feature map generated by a pre-trained model.

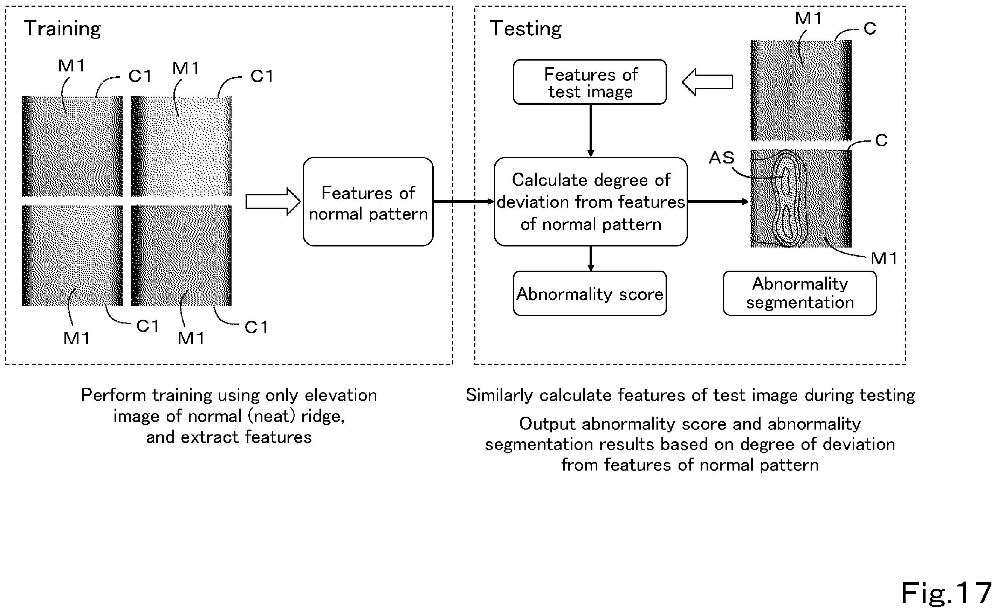

FIG. 17 illustrates an example of the elevation image C that has undergone abnormality detection processing. As illustrated in FIG. 17, the abnormality detection AI (e.g., PatchCore) is trained with the normal image C1 representing the elevation image C of a normal (neat) ridge M1, and extracts features representing the normal pattern. The abnormality detection AI compares the features of a test image of the ridge M1 with the features of the normal pattern, and calculates the degree of deviation of the test image of the ridge M1 from the features of the normal pattern. The test image in FIG. 17 is the elevation image C generated at S25 in FIGS. 8 and 9B. In this way, the abnormality detection AI outputs an abnormality score and abnormality segmentation AS (abnormality distribution) results based on the degree of deviation from the features of the normal pattern. The abnormality score is proportional to the degree of deviation. The abnormality segmentation AS (abnormality distribution) indicates the degrees (categories) of abnormality by determining to which of a plurality of categories each degree of deviation belongs. FIG. 17 illustrates the elevation image C with the abnormality segmentation AS.

The abnormality detection AI is not limited to PatchCore, but may be any one of the followings: EfficientAD, Picturable and Unpicturable Anomaly Detection (PUAD), Self-supervised Learning and Selfattentive Graph convolution (SLSG), ReConPatch, Denoising Diffusion Anomaly Detection (DDAD), and PaDiM. The abnormality detection processing is not limited to processing using the abnormality detection AI but various types of abnormality detection processing may be used, such as image recognition processing or image pattern matching processing.

The arithmetic processor 20c performs determination about a formation abnormality in formation of the formed object M using a processing result (S26) obtained by subjecting the elevation image C to abnormality detection processing. The arithmetic processor 20c determines that there is a formation abnormality in formation of the formed object M when the degree of deviation, which is the processing result, is greater than a threshold. FIG. 9C illustrates an example of visualization processing of the formed object M and an example of control processing based on a formation abnormality. For example, as illustrated in FIG. 9C, the arithmetic processor 20c determines that there is a formation abnormality in formation of the formed object M when an abnormality score corresponding to the degree of deviation, which is the processing result, is greater than the threshold (S31 to S35). The threshold may include a first threshold (e.g., 1.5), and a second threshold (e.g., 2.0) having a greater value than the first threshold. The threshold (the first threshold and the second threshold) may have a value other than those mentioned above. There may be only a single threshold, or three or more thresholds. The threshold differs depending on the type of the working device 2. That is, the threshold may have a value that differs depending on the type of the working device 2.

As illustrated in FIG. 9C, when the degree of deviation (abnormality score) is equal to or less than the first threshold (S31: No), the arithmetic processor 20c determines that the formed object M includes no abnormalities (S32). The arithmetic processor 20c continues the work (ridging) currently performed by the working device 2 (S32), and proceeds to S21 illustrated in FIG. 9B. That is, since the ridge M1 is formed normally, the working machine 1 continues to perform ridging.

As illustrated in FIG. 9C, when the degree of deviation (abnormality score) is greater than the first threshold (S31: Yes), then two pieces of processing, that is, S33 of the control processing and S41 of the visualization processing, are to be performed concurrently by the arithmetic processor 20c. Now, S33 of the control processing will be described before describing S41 of the visualization processing.

When the degree of deviation (abnormality score) is greater than the first threshold (S31: Yes) and equal to or less than the second threshold (S33: No), the arithmetic processor 20c determines that the formed object M includes an abnormality (minor abnormality) equal to or less than a predetermined level (S34), ignores the abnormality equal to or less than the predetermined level, continues the work (ridging) currently performed by the working device 2 (S34), and proceeds to S21 illustrated in FIG. 9B. That is, although there is an abnormality (minor abnormality) in formation of the ridge M1 equal to or less than the predetermined level, the abnormality is not significant enough to require redoing the ridging, and thus the working machine 1 continues to perform the current ridging.

The working machine 1 is configured to operate in manual operation in which at least one of the working device 2 or the traveling vehicle body 3 is manually controlled. The working machine 1 may include a notifier 28 to, when it is determined that there is a formation abnormality (e.g., an abnormality equal to or less than the predetermined level) in formation of the formed object M (e.g., the ridge M1) during the manual operation, provide a notification of the formation abnormality (abnormality equal to or less than the predetermined level). The notifier 28 is, for example, a speaker, buzzer, or the like that outputs a notification sound (such as voice guidance or a warning sound) indicating that there is a formation abnormality (abnormality equal to or less than the predetermined level) in formation of the formed object M (e.g., the ridge M1). The notifier 28 may be the display 15. For example, the display 15 may, instead of or in addition the output of a notification sound via the speaker, the buzzer, or the like, display a notification indicating that there is a formation abnormality (abnormality equal to or less than the predetermined level). That is, the notifier 28 alerts the driver in the case of manual operation. This allows the driver to take an action such as reducing the vehicle speed or lowering the working device 2 to a deeper position (lowering the working height of the working device 2).

The controller 20 controls at least one of the working device 2 or the traveling vehicle body 3 based on predetermined control content. The working machine 1 is configured to operate in automatic operation in which at least one of the working device 2 or the traveling vehicle body 3 is automatically controlled. The controller 20 is configured or programmed to, when it is determined that there is a formation abnormality (abnormality equal to or less than the predetermined level) in formation of the formed object M (e.g., the ridge M1) during the automatic operation, perform the automatic operation based on modified control content which differs from the predetermined control content. For example, the controller 20 is configured or programmed to, when it is determined that there is a formation abnormality (abnormality equal to or less than the predetermined level) in formation of the formed object M during the automatic operation, perform the automatic operation in which (i) a speed of the traveling vehicle body 3 is changed from the speed at a time when it was determined that there was a formation abnormality (abnormality equal to or less than the predetermined level), and/or (ii) a working position of the working device 2 is changed from the working position at the time when it was determined that there was a formation abnormality (abnormality equal to or less than the predetermined level). That is, in the case of automatic operation, the controller 20 takes an action such as reducing the vehicle speed, or lowering the working device 2 to a deeper position (lowering the working height of the working device 2).

Specifically, the controller 20 is configured or programmed to, when it is determined that there is a formation abnormality (abnormality equal to or less than the predetermined level) in formation of the formed object M during the automatic operation, perform the automatic operation in which (i) the speed of the traveling vehicle body 3 is changed to be lower than the speed at the time when it was determined that there was a formation abnormality (abnormality equal to or less than the predetermined level) and/or (ii) the working position of the working device 2 is changed to a second working position lower than a first working position which is the working position at the time when it was determined that there was a formation abnormality (abnormality equal to or less than the predetermined level). The controller 20 may be configured or programmed to, when it is determined that there is a formation abnormality (abnormality equal to or less than the predetermined level) in formation of the formed object M during the automatic operation, perform the automatic operation in which (i) the speed of the traveling vehicle body 3 is changed to be higher than the speed at the time when it was determined that there was a formation abnormality (abnormality equal to or less than the predetermined level) and/or (ii) the working position of the working device 2 is changed to a third working position higher than the first working position which is the working position at the time when it was determined that there was a formation abnormality (abnormality equal to or less than the predetermined level).

When the degree of deviation (abnormality score) is greater than the second threshold (S33: Yes), the arithmetic processor 20c determines that there is a formation abnormality in formation of the formed object M (S35), returns to the beginning of the corresponding ridge row to redo the ridging (S35), and returns to S11 illustrated in FIG. 9A. That is, since there is a formation abnormality in formation of the ridge M1 greater than the predetermined level, the working machine 1 redoes the ridging from the beginning of the ridge M1.

The notifier 28 is configured to, when it is determined that there is a formation abnormality (abnormality greater than the predetermined level) in formation of the formed object M (e.g., the ridge M1) during the manual operation, provide a notification of the formation abnormality (abnormality greater than the predetermined level). The notifier 28 notifies the driver of a message recommending the driver to redo the ridging. Based on the message for redoing the ridging, the driver redoes the ridging from the beginning of the ridge M1. In the case of automatic operation, the controller 20 causes the working device 2 to be raised out of contact with the agricultural field H1, and then causes the traveling vehicle body 3 to reverse (move backward) to the beginning of the ridge M1 to redo the ridging from the beginning of the ridge M1. In redoing the ridging, it may suffice to be able to return to the beginning of the ridge M1, and the method for enabling this is not limited to causing the traveling vehicle body 3 to reverse (move backward).

Now, S41 of the visualization processing in FIG. 9C will be described. As illustrated in FIG. 9C, the arithmetic processor 20c performs visualization processing (S41 to S43) when the degree of deviation (abnormality score) is greater than the first threshold (S31: Yes).

The arithmetic processor 20c converts the abnormality segmentation AS (see the upper right-hand portion of FIG. 8) of the elevation image C, which has been subjected to the abnormality detection processing (abnormality detection AI) at S26, into an abnormality label AL (see the lower right-hand portion of FIG. 8), and generates the elevation image C with the abnormality label AL (S41). The abnormality label AL is an image with, for example, an integer value ranging from 0 to 255 according to the abnormality segmentation AS (abnormality distribution).

The arithmetic processor 20c reconstructs the elevation image C with the abnormality label AL (abnormal region) into point cloud data with abnormal point cloud data in the coordinate system of the sensor assembly 25. For example, the arithmetic processor 20c reconstructs the elevation image C with the abnormality label AL, which has been generated at S41, into point cloud data with the abnormality label AL (see the image of the point cloud data PD in the lower middle portion of FIG. 8) (S42). The reconstruction is performed by using the parameters used for the elevation image generation at S23 to S25. Although the ridge M1 having a semi-cylindrical shape is depicted in the image of the point cloud data PD in the lower middle portion of FIG. 8, this is for illustrative purposes only. It is to be understood that, more precisely, the ridge M1 having a trapezoidal shape is depicted.

The arithmetic processor 20c positions the image captured by the imager 26 and the point cloud data with the abnormal point cloud data relative to each other through calibration (LiDAR camera calibration (LCC)), and generates a composite image SI in which an abnormal region image AE (an image representing an abnormal area generated based on the abnormality label AL) represented by the abnormal point cloud data is superimposed on the captured image (S43). The controller 20 then causes the display 15 to display the composite image SI in which only the abnormal region image AE (the abnormality label AL) is superimposed on the captured image.

The controller 20 transmits the composite image SI to the server 50 illustrated in FIG. 1 (S44). The storing device 52 of the server 50 stores the composite image SI. The controller 20 may associate the composite image SI, and position information of the formed object M included in the composite image SI with each other, and transmit the composite image SI and the position information associated with each other to the server 50. The storing device 52 of the server 50 stores the composite image SI, and the position information of the formed object M included in the composite image SI such that the composite image SI and the position information are associated with each other.

As illustrated in FIGS. 8 and 9B mentioned above, the evaluation method includes causing the arithmetic processor 20c to perform determination about a formation abnormality in formation of the formed object M formed by the working device 2 on the agricultural field H1 based on the elevation image C of the formed object M (S25 and S26).

The following describes main characteristic items of evaluation systems S and evaluation methods according to example embodiments and the like described above and effects achieved thereby.

(Item A1) An evaluation S system including an arithmetic processor 20c configured or programmed to perform determination about a formation abnormality in formation of a formed object M formed by a working device 2 on an agricultural field H1 based on an image C (e.g., elevation image C) of the formed object M.

This configuration makes it possible to correctly evaluate whether the formed object M formed by the working device 2 on the agricultural field H1 is acceptable.

(Item A2) The evaluation system S according to item A1, wherein the arithmetic processor 20c is configured or programmed to perform determination about a formation abnormality in formation of the formed object M using a processing result obtained by subjecting the image C to abnormality detection processing.

This configuration makes it possible to identify a formation abnormality that is difficult to recognize or likely to be overlooked with human eyes.

(Item A3) The evaluation system S according to item A2, wherein the arithmetic processor 20c is configured or programmed to perform the abnormality detection processing which includes calculating the degree of deviation of a portion of the image C that represents the formed object from a shape of a normal formed object (e.g., normal image C1), and determine that there is a formation abnormality in formation of the formed object M when the degree of deviation, which is the processing result, is greater than a threshold.

This configuration makes it possible to evaluate a formation abnormality in formation of the formed object M according to an objective criterion, based on the degree of the formation abnormality (the degree of deviation).

(Item A4) The evaluation system S according to item A2 or A3, wherein the arithmetic processor 20c is configured or programmed to perform the abnormality detection processing which includes calculating an abnormal region in which the portion of the image C that represents the formed object deviates from the shape of the normal formed object, and generate the image C with the abnormal region.

This configuration makes it possible to recognize, for example, the position, size, and/or extent of an abnormal region in the image C.

(Item A5) The evaluation system S according to any one of items A1 to A4, further including a working machine 1 including the working device 2 and a traveling vehicle body 3 with the working device 2 attached thereto, the working machine 1 being configured to operate in manual operation in which at least one of the working device 2 or the traveling vehicle body 3 is manually controlled, wherein the working machine 1 includes a notifier 28 to, when it is determined that there is a formation abnormality in formation of the formed object M during the manual operation, provide a notification of the formation abnormality.

This configuration makes it possible to, in the case of the manual operation, provide a notification indicating that there is a formation abnormality in formation of the formed object M, and thus reduce the occurrence of formation abnormality.

(Item A6) The evaluation system S according to any one of items A1 to A5, further including a working machine 1 including the working device 2, a traveling vehicle body 3 with the working device 2 attached thereto, and a controller 20 configured or programmed to control at least one of the working device 2 or the traveling vehicle body 3 based on predetermined control content, the working machine 1 being configured to operate in automatic operation in which at least one of the working device 2 or the traveling vehicle body 3 is automatically controlled, wherein the controller 20 is configured or programmed to, when it is determined that there is a formation abnormality in formation of the formed object M during the automatic operation, perform the automatic operation based on modified control content which differs from a case in which it is not determined that there is a formation abnormality in formation of the formed object.

With this configuration, the automatic operation is performed based on modified control content which differs from a case in which it is not determined that there is a formation abnormality in formation of the formed object. This makes it possible to reduce the occurrence of formation abnormality in the case of the automatic operation.

(Item A7) The evaluation system S according to item A6, wherein the controller 20 is configured or programmed to, when it is determined that there is a formation abnormality in formation of the formed object M during the automatic operation, perform the automatic operation in which (i) a speed of the traveling vehicle body 3 is changed from the speed at a time when it was determined that there was a formation abnormality in formation of the formed object and/or (ii) a working position of the working device 2 is changed from the working position at the time when it was determined that there was a formation abnormality in formation of the formed object.

With this configuration, the automatic operation is performed in which (i) the speed (vehicle speed) of the traveling vehicle body 3 is changed from the speed at the time when it was determined that there was a formation abnormality in formation of the formed object M and/or (ii) the working position of the working machine 1 is changed from the working position at the time when it was determined that there was a formation abnormality in formation of the formed object M. This makes it possible to reduce the occurrence of formation abnormality in the case of the automatic operation.

(Item A8) The evaluation system S according to item A7, wherein the controller 20 is configured or programmed to, when it is determined that there is a formation abnormality in formation of the formed object M during the automatic operation, perform the automatic operation in which (i) the speed of the traveling vehicle body 3 is changed to be lower than the speed at the time when it was determined that there was a formation abnormality in formation of the formed object and/or (ii) the working position of the working device 2 is changed to a second working position lower than a first working position which is the working position at the time when it was determined that that there was a formation abnormality in formation of the formed object.

With this configuration, the automatic operation is performed in which (i) the speed of the traveling vehicle body 3 is changed to be lower than the speed at the time when it was determined that there was a formation abnormality in formation of the formed object M and/or (ii) the working position of the working machine 1 is changed to the second working position lower than the first working position which is the working position at the time when it was determined that there was a formation abnormality in formation of the formed object M. This makes it possible to reduce the occurrence of formation abnormality in the case of the automatic operation.

(Item A9) The evaluation system S according to any one of items A1 to A8, further including a sensor assembly 25 to acquire point cloud data representing one or more geographical features in a surrounding area of the working device 2, wherein the arithmetic processor 20c is configured or programmed to generate the image C by subjecting, to image processing, extracted point cloud data extracted from a region-of-interest K of the point cloud data.

With this configuration, image processing is performed by extracting point cloud data from the region-of-interest K of the point cloud data representing one or more geographical features in the surrounding area. This makes it possible to reduce the number of data points, and thus reduce the load associated with the image processing.

(Item A10) The evaluation system S according to item A9, wherein the arithmetic processor 20c is configured or programmed to start the image processing upon satisfaction of a detection condition for the formed object M.

This configuration makes it possible to start the image processing at a time suitable for detection of the formed object M. This makes it possible to prevent or reduce unnecessary image processing.

(Item A11) The evaluation system S according to item A10, wherein the arithmetic processor 20c is configured or programmed to determine that the detection condition is satisfied when, after work performed by the working device 2 is started, a predetermined distance has been traveled since the start of the work.

This configuration makes it possible to start the image processing upon the start of formation of the formed object M. This makes it possible to prevent or reduce unnecessary image processing.

(Item A12) The evaluation system S according to item A9, further including a working machine 1 including the working device 2, a traveling vehicle body 3 with the working device 2 attached thereto, a position estimator 20a to estimate a position of the traveling vehicle body 3, and the sensor assembly 25, wherein the arithmetic processor 20c is configured or programmed to convert, based on position information indicating a plurality of the positions of the traveling vehicle body 3 estimated by the position estimator 20a, pieces of extracted point cloud data extracted from a plurality of the regions-of-interest K acquired by the sensor assembly 25 each into a world coordinate system from a coordinate system of the sensor assembly 25, the plurality of regions-of-interest K being different in terms of position information from each other, and combine the pieces of extracted point cloud data of the plurality of regions-of-interest K in the world coordinate system.

With this configuration, since pieces of point cloud data from regions-of-interest K that differ in terms of position can be appropriately positioned relative to each other and combined with each other, the point cloud data can be dense at the location where the pieces of point cloud data are merged. This makes it possible to improve the image quality of the image C.

(Item A13) The evaluation system S according to item A12, wherein the arithmetic processor 20c is configured or programmed to generate the image C which is a planar image in a predetermined plane of the world coordinate system obtained from the combined pieces of extracted point cloud data in the world coordinate system.

This configuration makes it possible to generate the image C in a suitable manner.

(Item A14) The evaluation system S according to item A4, wherein the arithmetic processor 20c is configured or programmed to reconstruct the image C with the abnormal region into point cloud data with abnormal point cloud data in a coordinate system of a sensor assembly 25.

This configuration makes it possible to differentiate abnormal point cloud data from point cloud data.

(Item A15) The evaluation system S according to item A14, further including a display 15, and an imager 26 to capture an image of a geographical feature in a surrounding area of the working device 2, wherein the arithmetic processor 20c is configured or programmed to position the image captured by the imager 26 and the point cloud data with the abnormal point cloud data relative to each other through calibration, generate a composite image SI in which an abnormal region image AE represented by the abnormal point cloud data is superimposed on the captured image, and cause the display 15 to display the composite image SI.

With this configuration, the captured image and the point cloud data with the abnormal point cloud data are positioned relative to each other, and the composite image SI is generated and displayed, the composite image SI being an image in which the abnormal region image AE represented by the abnormal point cloud data is superimposed on the captured image. This makes it possible to recognize the position, size, extent, and the like of an abnormal region in the captured image.

(Item A16) The evaluation system S according to item A15, further including a server 50, wherein the server 50 includes a memory and/or a storage 52 to store the composite image SI and position information of the formed object M included in the composite image SI such that the composite image SI and the position information are associated with each other.

This configuration makes it possible to manage the composite image SI with the abnormal region image AE superimposed thereon, and the position information of the formed object M included in the composite image SI such that the composite image SI and the position information are associated with each other.

(Item A17) The evaluation system S according to item A3, wherein the threshold includes a first threshold and a second threshold having a greater value than the first threshold, and the arithmetic processor 20c is configured or programmed to determine that the formed object M includes no abnormalities when the degree of deviation is equal to or less than the first threshold, determine that the formed object M includes an abnormality equal to or less than a predetermined level when the degree of deviation is greater than the first threshold and equal to or less than the second threshold, and determine that there is a formation abnormality in formation of the formed object M when the degree of deviation is greater than the second threshold.

This configuration makes it possible to properly determine the following three levels with respect to formation of the formed object M: normal; minor abnormality; and non-negligible formation abnormality.

(Item A18) The evaluation system S according to item A3, wherein the threshold differs depending on a type of the working device 2.

With this configuration, the threshold differs depending on the type of the working device 2. This makes it possible to properly perform determination about a formation abnormality in formation of the formed object M that differs in at least one of its shape or size depending on the type of the working device 2.

(Item A19) An evaluation method including causing an arithmetic processor 20c to perform determination about a formation abnormality in formation of a formed object M formed by a working device 2 on an agricultural field H1 based on an image C of the formed object M.

This configuration makes it possible to correctly evaluate whether the formed object M formed by the working device 2 on the agricultural field H1 is acceptable.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. An evaluation system (S) comprising:
an arithmetic processor (20c) configured or programmed to perform determination about a formation abnormality in formation of a formed object (M) formed by a working device (2) on an agricultural field (H1) based on an image (C) of the formed object (M).

2. The evaluation system (S) according to claim 1, wherein the arithmetic processor (20c) is configured or programmed to perform determination about a formation abnormality in formation of the formed object (M) using a processing result obtained by subjecting the image (C) to abnormality detection processing.

3. The evaluation system (S) according to claim 2, wherein the arithmetic processor (20c) is configured or programmed to:
perform the abnormality detection processing which includes calculating the degree of deviation of a portion of the image (C) that represents the formed object (M) from a shape of a normal formed object (M); and
determine that there is a formation abnormality in formation of the formed object (M) when the degree of deviation, which is the processing result, is greater than a threshold.

4. The evaluation system (S) according to claim 2 or 3, wherein the arithmetic processor (20c) is configured or programmed to:
perform the abnormality detection processing which includes calculating an abnormal region in which the portion of the image (C) that represents the formed object (M) deviates from the shape of the normal formed object (M); and
generate the image (C) with the abnormal region.

5. The evaluation system (S) according to any one of claims 1 to 4, further comprising:
a working machine (1) including the working device (2) and a traveling vehicle body (3) with the working device (2) attached thereto, the working machine (1) being configured to operate in manual operation in which at least one of the working device (2) or the traveling vehicle body (3) is manually controlled; wherein
the working machine (1) includes a notifier to (28), when it is determined that there is a formation abnormality in formation of the formed object (M) during the manual operation, provide a notification of the formation abnormality.

6. The evaluation system (S) according to any one of claims 1 to 5, further comprising:
a working machine (1) including the working device (2), a traveling vehicle body (3) with the working device (2) attached thereto, and a controller (20) configured or programmed to control at least one of the working device (2) or the traveling vehicle body (3) based on predetermined control content, the working machine (1) being configured to operate in automatic operation in which at least one of the working device (2) or the traveling vehicle body (3) is automatically controlled; wherein
the controller (20) is configured or programmed to, when it is determined that there is a formation abnormality in formation of the formed object during the automatic operation, perform the automatic operation based on modified control content which differs from a case in which it is not determined that there is a formation abnormality in formation of the formed object (M).

7. The evaluation system (S) according to claim 6, wherein the controller (20) is configured or programmed to, when it is determined that there is a formation abnormality in formation of the formed object (M) during the automatic operation, perform the automatic operation in which (i) a speed of the traveling vehicle body (3) is changed from the speed at a time when it was determined that there was a formation abnormality in formation of the formed object (M) and/or (ii) a working position of the working device (2) is changed from the working position at the time when it was determined that there was a formation abnormality in formation of the formed object (M).

8. The evaluation system (S) according to claim 7, wherein the controller (20) is configured or programmed to, when it is determined that there is a formation abnormality in formation of the formed object (M) during the automatic operation, perform the automatic operation in which (i) the speed of the traveling vehicle body (3) is changed to be lower than the speed at the time when it was determined that there was a formation abnormality in formation of the formed object (M) and/or (ii) the working position of the working device (2) is changed to a second working position lower than a first working position which is the working position at the time when it was determined that that there was a formation abnormality in formation of the formed object (M).

9. The evaluation system (S) according to any one of claims 1 to 8, further comprising a sensor assembly (25) to acquire point cloud data representing one or more geographical features in a surrounding area of the working device (2); wherein
the arithmetic processor (20c) is configured or programmed to generate the image (C) by subjecting, to image processing, extracted point cloud data extracted from a region-of-interest (K) of the point cloud data.

10. The evaluation system (S) according to claim 9, wherein the arithmetic processor (20c) is configured or programmed to start the image processing upon satisfaction of a detection condition for the formed object (M).

11. The evaluation system (S) according to claim 10, wherein the arithmetic processor (20c) is configured or programmed to determine that the detection condition is satisfied when, after work performed by the working device (2) is started, a predetermined distance has been traveled since the start of the work.

12. The evaluation system (S) according to claim 9, further comprising a working machine (1) including the working device (2), a traveling vehicle body (3) with the working device (2) attached thereto, a position estimator (20a) to estimate a position of the traveling vehicle body (3), and the sensor assembly (25); wherein
the arithmetic processor (20c) is configured or programmed to:
convert, based on position information indicating a plurality of the positions of the traveling vehicle body (3) estimated by the position estimator (20a), pieces of extracted point cloud data extracted from a plurality of the regions-of-interest (K) acquired by the sensor assembly (25) each into a world coordinate system from a coordinate system of the sensor assembly (25), the plurality of regions-of-interest (K) being different in terms of position information from each other; and
combine the pieces of extracted point cloud data of the plurality of regions-of-interest (K) in the world coordinate system.

13. The evaluation system (S) according to claim 12, wherein the arithmetic processor (20c) is configured or programmed to generate the image (C) which is a planar image in a predetermined plane of the world coordinate system obtained from the combined pieces of extracted point cloud data in the world coordinate system.

14. The evaluation system (S) according to claim 4 taken in combination with any one of claims 1 to 13, wherein the arithmetic processor (20c) is configured or programmed to reconstruct the image (C) with the abnormal region into point cloud data with abnormal point cloud data in a coordinate system of a sensor assembly (25).

15. An evaluation method comprising causing an arithmetic processor (20c) to perform determination about a formation abnormality in formation of a formed object (M) formed by a working device (2) on an agricultural field (H1) based on an image (C) of the formed object (M).
